# EUROPEAN PATENT APPLICATION

(11) **EP 4 800 931 A2**
(43) Date of publication of application: **02.09.2026**
(21) Application number: 26178266.8
(22) Date of filing: 12.07.2024
(51) Int. Cl.: H04B 3/54

(54) **DC BUS MANAGEMENT**

(30) Priority: 13.07.2023 US 202363513374 P
(62) Document number(s) of the earlier application(s) in accordance with Art. 76 EPC: 24188429.5 / 4 492 613
(71) Applicant: Solaredge Technologies Ltd., Herzeliya 4673335 (IL)
(72) Inventor: HARGASH, Asaf, 4673335 Herzeliya (IL); GOMBERG, Bryon Roos, 4673335 Herzeliya (IL)
(74) Representative: V.O.

(57) **Abstract**

Systems, apparatuses, and methods are described for DC bus management. During startup, a power device may provide power at different voltages to the DC bus to ramp up the voltage of the DC bus from a zero voltage level to an operating voltage level. For example, the power device may be configured to provide power at different voltage levels during the ramp up. During the ramp up, the power device may send communications to query additional devices. Based on a response to the query the power device may set the voltage level. Protocols for over-current, sleep mode, and shutdown mode may include decreasing a higher voltage level to a lower voltage level.

## Description

### BACKGROUND

In an electric power system, a direct current (DC) bus may be used to connect and distribute power between different devices of the power system. The DC bus may include busbars. The busbars together with electrical wires may be used to connect the different devices of the power system to each other. The busbars and electrical wires may be made from electrically conductive material, such as metal. The busbars and electrical wires may be covered with insulating material. The different devices of the power system may include power sources that provide power to the DC bus, or loads that take power from the DC bus.

### SUMMARY

The following summary presents a simplified summary of certain features. The summary is not an extensive overview and is not intended to identify key or critical elements.

Systems, apparatuses, and methods are described for DC bus management. The systems, apparatuses, and methods may be used for startup, management, and shutdown of a relatively high voltage DC power system connected to the DC bus.

In some examples, a power device may provide power at different ramp up voltage levels to the DC bus to ramp up the voltage of the DC bus from a zero voltage level to an operating voltage level. For example, the power device may be configured to provide power at a first lowest voltage level, provide power at a second medium voltage level, and provide power at a third highest voltage level. The third voltage level may be the operating voltage level. There may be more than three voltage levels or less than three voltage levels. For example, if there are four voltage levels there may be a safety voltage level, a low voltage level, a medium voltage level, and a high voltage level. The high voltage level may be the operating voltage level. If there are three voltage levels they may be low, medium and high, or safety, low and high, or safety, medium and high, etc. The voltage levels may be voltage values, or ranges of values. In some examples, the power device may provide power at different ramp down voltage levels to the DC bus to ramp down the voltage of the DC bus from an operating voltage level to a zero voltage level. For example, the voltage may be ramped down to discharge one or more capacitors that are internal to one or more devices connected to the DC bus.

In some examples, the power device may send communications to query additional devices (e.g., power devices, power sources, loads, etc.). Based on a response to the query, the power device may control the voltage level of the DC bus.

In some examples, the power device may monitor the DC bus for overcurrent conditions. Based on overcurrent conditions, the power device may lower the voltage to a percentage of the DC bus voltage level to try and correct the overcurrent situation. In some examples, the power device may also lower the voltage to a lower DC bus voltage level to try and correct the overcurrent situation.

In some examples, the power device may be configured to lower the DC bus voltage level based on a mode of operation (e.g., sleep mode of operation, shutdown mode of operation, etc.).

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1 shows an example DC bus.
FIG. 2 shows an example DC bus.
FIG. 3A shows an example flow diagram.
FIG. 3B shows an example flow diagram.
FIG. 4 shows an example graph.
FIG. 5 shows an example flow diagram.
FIG. 6 shows an example graph.
FIG. 7 shows an example flow diagram.
FIG. 8 shows an example flow diagram.
FIG. 9 shows an example flow diagram.
FIG. 10 shows an example flow diagram.
FIG. 11 shows an example flow diagram.
FIG. 12 shows an example flow diagram.
FIG. 13 shows an example state diagram.
FIG. 14 shows an example flow diagram.

### DETAILED DESCRIPTION

The accompanying drawings, which form a part hereof, show examples of the disclosure. It is to be understood that the examples shown in the drawings and/or discussed herein are non-exclusive and that there are other examples of how the disclosure may be practiced.

Systems, apparatuses, and methods are described for DC bus management. The systems, apparatuses, and methods may be used for startup, management, and shutdown of a relatively high voltage DC power system connected to the DC bus. During startup, a power device may provide power at different ramp up voltage levels to the DC bus to ramp up the voltage of the DC bus from a zero voltage level to an operating voltage level. For example, the power device may be configured to provide power at a first lowest voltage level, provide power at a second medium voltage level, and provide power at a third highest voltage level. The third voltage level may be the operating voltage level. There may be more than three voltage levels or less than three voltage levels. For example, if there are four voltage levels there may be a safety voltage level, a low voltage level, a medium voltage level, and a high voltage level. The high voltage level may be the operating voltage level. If there are three voltage levels they may be low, medium and high, or safety, low and high, or safety, medium and high, etc. The voltage levels may be voltage values, or ranges of values. Ramp up may be done to prevent an inrush current in one or more devices that are arranged to connect to the DC bus. For example, ramp up may be performed on an internal DC bus before connecting to an external DC bus to prevent an inrush of current in the device. For example, pre-charge may be performed to charge one or more capacitors connected to an internal DC bus of the device before connecting the device to an external DC bus. The connection between a DC power source and the capacitors may be via one or more switches (e.g., transistors) of converter circuitry of the device. The connection to the external DC bus may be via one or more switches (e.g., relays), for example, after the capacitor has been charged to a set voltage level.

For example, the safety voltage level may be between about 5 volts and about 40 volts. The low voltage level may be between about 40 volts and about 260 volts. The medium voltage level may be between about 260 volts and about 400 volts. The high voltage level may be between about 400 volts and about 1500 volts. The operating voltage level may be a voltage value or a ranges of values. For example, the operating voltage level may be about 1500 VDC. As another example, the safety voltage level may be between about 5 volts and about 12 volts, or between about 30 volts and about 50 volts. As another example, the low voltage level may be between about 30 volts and about 50 volts. The safety voltage level may be set in order to provide a relatively low and relatively safe voltage. The safety voltage may be set high enough to provide power to devices connected to the DC bus. For example, the safety voltage may be high enough to provide sufficient startup power to certain devices (for example, sufficient voltage to power control circuitry of circuitry of the devices). In some examples, the low voltage may be high enough to provide sufficient startup power to certain devices (for example, sufficient voltage to power control circuitry of circuitry of the devices). These may be the same or other devices that are powered up by the safety voltage. For example, if a first type of device is connected to the DC bus then the low voltage may be set at 30 volts, and if a second type of device is connected to the DC bus then the low voltage may be set at 50 volts. In some examples, additional devices may be connected to the DC bus at higher voltage levels (e.g., medium and/or high. In some examples, certain devices may operate in different modes of operation depending on the voltage level. For example, a device may start up at a safety or low voltage level, and the device may operate to supply greater power or consume greater power at a medium or high voltage level. The mode of operation of the device may also depend on the number and/or types of other devices connected to the DC bus. In some examples, fewer devices may be connected to the DC bus at lower voltage levels and a greater number of devices and/or other types of devices may be connected to the DC bus at higher voltage levels. In some examples, the voltage level may be set based on an amount of current that may be supplied. The amount of current may be based on connections or wires of devices connected to the DC bus. For example, the greater the current that is able to be supplied the greater the voltage level that is set.

The power device may be limited to a power that is less than the consumption of the total power of the loads on the DC bus. For example, the power device may be limited to between about 10 watts and about 300 watts.

During the ramp up, the power device may perform communications to query additional devices (e.g., other power devices, loads, etc.) connected to the DC bus to solicit responses from the additional devices. Protocols for over-current, sleep mode, and shutdown mode may include decreasing a higher voltage level to a lower voltage level.

In some examples, a power device may be configured to measure a DC output voltage of the power device. The power device may control the output voltage to ramp up the DC bus voltage from a zero voltage level to a first voltage level. Based on the measured voltage being determined to be equal to the first voltage level (e.g., for a predetermined amount of time), the power device may perform communications to query additional devices. The additional devices may be connected to the DC output terminals of the power device via the DC bus. The additional devices may be in the proximity of the DC bus and may be in the process of connecting to the DC bus. After an additional device has responded to the query, the power device may output a second voltage level. In some examples, if no response is received and the voltage is equal to the first voltage level for a predetermined time, the power device may output the second voltage level. Based on the measured voltage being determined to be equal to the second voltage level (e.g., for a predetermined amount of time), the power device may perform communications to query second additional devices. After a second additional device has responded to the query, the power device may output a third voltage level. In some examples, if no response is received and the voltage is equal to the second voltage level for a predetermined time, the power device may output the third voltage level. In some examples, the additional devices may be configured to send communications based on receiving voltage at a voltage level without first receiving a query from a power device.

In some examples, a power device may be configured to measure a current supplied to the DC output terminals. Based on the measured current being determined to be greater than a first current threshold (e.g., for a predetermined amount of time), the power device may be configured to reduce the output voltage by a first predetermined amount relative to the output voltage level. Based on the measured current being determined to be greater than a second current threshold (e.g., for a predetermined amount of time), the power device may be configured to reduce the output voltage by a second predetermined amount relative to the output voltage level. Based on the measured current being determined to be greater than a third current threshold (e.g., for a predetermined amount of time), the power device may be configured to reduce the output voltage by a third predetermined amount relative to the output voltage level. In some examples, based on the measured current being determined to be greater than the third current threshold (e.g., for a predetermined amount of time), the power device may be configured to reduce the output voltage to a lower output voltage level.

In some examples, a first device connected to direct current (DC) bus terminals may be configured to transmit a query. The first device may receive a response to the query from a second device connected to or planning to connect to the DC bus terminals. The first device may receive a configuration profile from the second device. The first device may store the configuration profile. The first device may also determine a power profile of the second device, and store the power profile of the second device.

In some examples, the first device may determine a non-communicative third device connected to the DC bus terminals. The first device may determine a power profile of the non-communicative third device, and store the power profile of the third device.

In some examples, the configuration profile may include data related to at least one of: state of charge, power usage, time, or weather. The power profile may include data related to at least one of: state of charge, power usage, time, or weather.

In some examples, the configuration profile may be used to set a voltage at the DC bus terminals. The power profile of the second device and/or the power profile of the third device may be used to set a voltage at the DC bus terminals.

In some examples, a device may be configured to receive a first voltage at DC bus terminals. The device may receive a first query, reply to the first query, and receive a second voltage at the DC bus terminals. The device may receive a second query, reply to the second query, and receive a third voltage at the DC bus terminals. The device may be configured to transmit a configuration profile of the device. The device may include communications circuitry and may be configured to communicate using wired communications (e.g., PLC on the DC bus terminals) or using wireless communications (e.g., wi-fi).

In some examples, based on a determination that there is an overcurrent condition, a power device may be configured to determine which DC load connected to the DC bus is causing the overcurrent condition. The power device may communicate with that DC load and request that DC load to lower its power usage or to disconnect. In some examples, based on a determination that there is an overcurrent condition, the power device may be configured to send out a communication for all loads to request that high power loads should not connect to the DC bus yet (e.g., until the overcurrent condition has been resolved). In some examples, if there is no disconnect confirmation from the aberrant DC load and the overcurrent cycle repeats three times in a row, the power device may determine that the aberrant load is a non-communicative load. The power device may wait at a lower voltage level and not ramp up to a higher voltage level until another power device connects to the DC bus to help supply power to the aberrant non-communicative load (which is unable to disconnect using communication).

In some examples, if a second power device with a greater power supply than a first power device is connected to the DC bus, then the first power device may go into a monitoring mode of operation.

In some examples, a power device may be configured to go from a higher voltage level to a lower voltage level based on a relatively low measured current (e.g., a percentage of a maximum current for that voltage level) for a predetermined time. The power device may be configured to go from a higher voltage level to a lower voltage level based on data (e.g., historical usage data, weather usage data [cloudy], time usage data, such as time of day [night time], time of year [vacation], etc.). The power device may be configured to go from a higher voltage level to a lower voltage level based on a received request. In some examples, the power device may be configured to operate in a hibernation mode of operation (e.g., to go to a lower safety voltage level) after a first predetermined time of low current at a low voltage level, or after a second predetermined time at a high voltage level based on data or a request.

In some examples, a power device may be configured to go to a shutdown mode of operation by stepping down from a high voltage level to a low voltage level to a safety voltage level to a zero voltage level. Power device may be configured to spend a predetermined amount of time at each voltage level (which may be the same or different for different levels) in the shutdown mode of operation. The predetermined time may be calculated with enough time for loads to perform shutdown correctly (e.g., save data [e.g., power usage data], save settings, send communications, etc.).

In some examples, a power system includes a plurality of inverters. Each inverter may include bi-directional alternating current to direct current (AC-DC) converter circuitry. Each inverter may also include DC terminals and AC terminals. A first AC electrical network may be configured to connect to a utility grid and supply AC power to a first plurality of AC loads. A second AC electrical network may be configured to supply AC power to a second plurality of AC loads. The second AC electrical network may be isolated from the utility grid. A DC electrical network may be configured to supply DC power to a plurality of DC loads, and supply DC power to a third plurality of AC loads. First bi-directional converter circuitry of the plurality of inverters may be connected between the first AC electrical network and the DC electrical network. The bi-directional inverter may be configured to operate at a fixed power and a fixed voltage. A second inverter of the plurality of inverters may be connected between the second AC electrical network and the DC electrical network.

It is noted that the teachings of the presently disclosed subject matter are not bound by the systems and apparatuses described with reference to the figures. Equivalent and/or modified functionality may be consolidated or divided in another manner and may be implemented in any appropriate combination. For example, elements which are shown as separate units, may have their functionalities and/or components combined into a single unit.

It is also noted that like references in the various figures may refer to like elements throughout the application. Similar reference numbers may also connote similarities between elements. Throughout the application certain general references may be used to refer to any of the specific related elements. For example, power device 104 may refer to power device 104A and/or power device 104B, charge storage circuitry 106 may refer to charge storage circuitry 106A and/or charge storage circuitry 106B, etc.

It is also noted that all numerical values given in the examples of the description are provided for purposes of example only and do not exclude the use of other numerical values for the same feature.

The terms "substantially" and "about" are used herein to indicate variations that are equivalent for an intended purpose or function (e.g., within a permissible variation range). Certain values or ranges of values are presented herein with numerical values being preceded by the terms "substantially" and "about". The terms "substantially" and "about" are used herein to provide literal support for the exact number that it precedes, as well as a number that is near to or approximately the number that the term precedes. In determining whether a number is near to or approximately a specifically recited number, the near or approximating un-recited number may be a number, which, in the context in which it is presented, provides a substantial equivalent of the specifically recited number.

Control devices, including "controller," "control circuitry," "computer," "processor," "processing circuitry," and variations of these terms as used herein, include any analog or digital electronic hardware circuit capable of performing one or more logical or arithmetic functions. The functions may be based on a received signal (e.g., from a sensor that measures a physical parameter as in the various examples described herein). Performance of the functions may cause an output of a signal (e.g., to control another device such as a switch or to provide an indication as in the various examples described herein). Such control devices include, by way of non-limiting examples, a digital signal processor (DSP), microprocessor, microcontroller, field programmable gate array (FPGA), application-specific integrated circuit (ASIC), embedded controller, analog comparator, analog-to-digital controller, digital-to-analog controller, etc., or combinations thereof. Such control devices may include or be connected to a memory that stores instructions that may be read, interpreted and executed by the devices, and based on the executed instructions, perform any one of functions or control as described herein. The terms "memory" or "data storage device" used herein include any volatile or non-volatile computer memory suitable to the presently disclosed subject matter (e.g., random-access memory [RAM], static random-access memory [SRAM], read-only memory [ROM], erasable programmable read-only memory [EPROM], electrically erasable programmable read-only memory [EEPROM], dynamic random-access memory [DRAM], etc.). The above may include any of the control circuitry disclosed herein. More specifically, by way of non-limiting example, the above may include the control circuitry 210 disclosed in the present application. Control devices may be included or connected to interface hardware, that converts signals from other devices (e.g., sensors) to signals compatible with the control device (e.g., a comparator or analog to digital [A/D] converter that converts an analog signal to a digital signal), or that converts signals from the control device to signals compatible with another device (e.g., an amplifier for driving a control input of a switch). The control circuitry may be configured to output control signals to control an operational state (e.g., ON, OFF, opened, closed, etc.) of one or more switches.

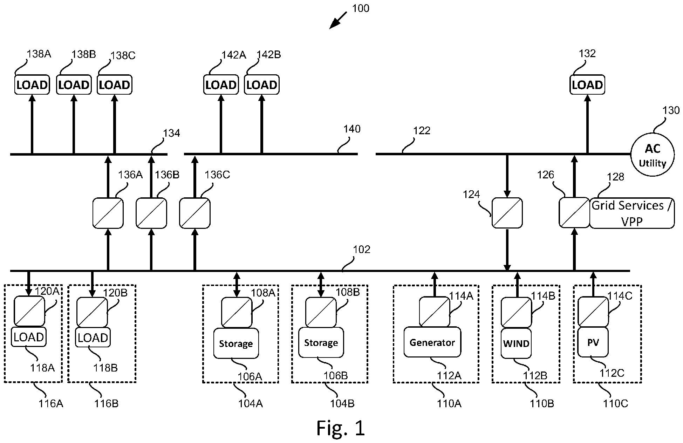

Reference is now made to Fig. 1, which shows a power system 100.

Power system 100 may include: a DC bus 102, power devices 104, 110, and DC loads 116. Power system 100 may also include: AC buses 122, 134, 140, power converters 124, 126, 136, and AC loads 132, 138, 142. Power converters of the power system 100 may also be referred to as converter circuitry, and vice versa.

DC bus 102 may be configured to distribute power for a location. For example, DC bus 102 may be configured to distribute power for a home, office building, sports arena, university campus, etc.

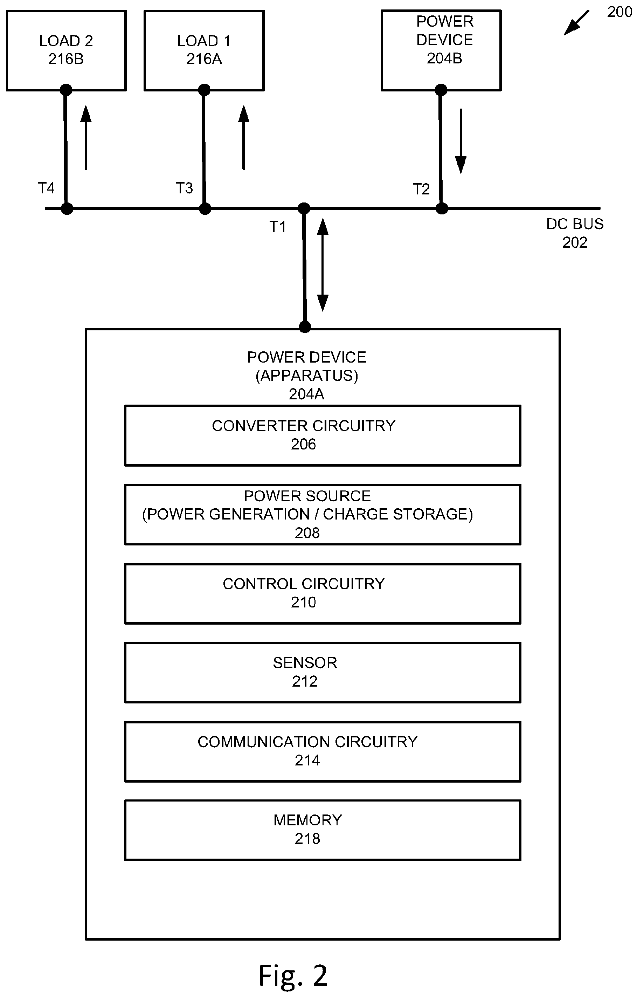

Power devices 104, 110 may be configured to provide power to DC bus 102. Power devices 104, 110 may be bi-directional power devices 104 or uni-directional power devices 110. For example, bi-directional power devices 104 may include charge storage circuitry 106 (e.g., battery, capacitors, etc.). The charge storage circuitry 106 may be configured to supply power to DC bus 102 or receive power from DC bus 102. Bi-directional power devices 104 may also include converter circuitry 108 (e.g., DC to DC converter circuitry) and control circuitry (e.g., control circuitry 210 shown in Fig. 2). Bi-directional power devices 104 may be part of an electric vehicle (EV). Uni-directional power devices 110 may include power generation circuitry 112 (e.g., circuitry to generate power from a power source, for example, generator, wind, PV, etc.). The power generation circuitry 112 may be configured to supply power to DC bus 102. Uni-directional power devices 110 may also include converter circuitry 114 (e.g., DC to DC converter circuitry) and control circuitry (e.g., control circuitry 210 shown in Fig. 2).

Power generation circuitry 112 may include one or more PV modules, e.g. a plurality of PV modules connected in series as a serial string of PV modules. Each PV module may include a plurality of PV cells, e.g. one or more serial strings of PV cells.

Power converter circuitry may include, for example, one or more: buck converter circuitry, boost converter circuitry, buck/boost converter circuitry, buck + boost converter circuitry, flyback converter circuitry, etc. Power converter circuitry may include direct current (DC) to DC power converters. Power converter circuitry may be configured to convert an input power to an output power.

Each power device 104, 110 may include one or more terminals connected to the DC bus 102. The one or more terminals of the power device 104, 110 may be switchably connected to the DC bus 102. Each power device 104, 110 may include one or more terminals connected to terminals of a power source (e.g., power generation circuitry, charge storage circuitry, etc.). The one or more terminals of the power device 104, 110 may be switchably connected to the power source.

Power devices 104, 110 may be configured to provide power to DC bus 102 whether or not the AC grid is connected to the DC bus 102. For example, Power devices 104, 110 may be configured to provide power to DC bus 102 using stored power or generated power. As an example, bi-directional power device 104A may ramp up voltage on DC bus 102 and provide power to DC loads 116 before uni-directional power devices 110 are connected to DC bus 102. For example, bi-directional power device 104A may ramp up voltage on DC bus 102 before uni-directional power devices 110 are producing sufficient power (e.g., power greater than a power threshold). After uni-directional power devices 110 are producing sufficient power (e.g., power greater than the power threshold) then uni-directional power devices 110 may connect and supply power to a DC bus 102 that has already been "pre-charged" / raised / ramped up greater than a zero voltage level. In some examples, uni-directional power devices 110 may connect and supply power to a DC bus 102 that is already at a highest voltage level (e.g., an operating voltage level) after the DC bus 102 voltage was ramped up by a bi-directional power device 104. In some examples, after a uni-directional power device 110 connects to the DC bus 102, the bi-directional power device 104 may switch from a power supply mode of operation to a charge storage mode of operation. For example, if the uni-directional power device 110 is producing sufficient power, or greater power than the bi-directional power device 104. Based on a determination that the state of charge of the bi-directional power device 104A is high enough (e.g., greater than a charge threshold), it may switch back from the charge storage mode of operation to the power supply mode of operation. For example, if the bi-directional power device 104 is producing sufficient power, or greater power than the uni-directional power device 110. In some examples, after the uni-directional power device 110 connects to the DC bus 102, the bi-directional power device 104 may switch into a monitoring mode of operation. In the monitoring mode of operation, the bi-directional power device 104 might not supply power to the DC bus 102, or charge the charge storage circuitry 106, but bi-directional power device 104 may just draw a relatively small amount of power to monitor the DC bus 102 to determine if power is needed to be supplied from the bi-directional power device 104. For example, bi-directional power device 104 may draw a minimal power sufficient to provide power to control circuitry and/or sensors, but may disconnect charge storage circuitry 106 from the DC bus 102.

DC loads 116 may be configured to receive power from DC bus 102. DC loads 116 may include communication circuitry configured to communicate with other devices connected to DC bus 102 (e.g., power devices 104, 110, other DC loads 116, etc.). Some DC loads 116 might not have communication circuitry, and may be referred to as non-communicative loads. DC loads 116 may also include converter circuitry 120 (e.g., DC to DC converter circuitry) and control circuitry (e.g., configured to connect and disconnect DC load 116 to and from the DC bus 102, and/or control communication with other devices). DC loads 116 may include memory. The memory may store a configuration profile of the DC load 116. The configuration profile of the DC load 116 may include data related to: power usage of the DC load 116, time of usage of the DC load 116, weather conditions which affect the power usage of the DC load 116, etc. DC load 116 may be configured to respond to a query from a power device 104, 110. DC load 116 may be configured to send the configuration profile of the DC load 116 to the power device 104, 110 (e.g., using wired or wireless communications).

Power converter 124 may be connected between DC bus 102 and AC bus 122. Power converter 124 may be configured to provide power to DC bus 102 from an AC grid 130. Power converter 124 may include converter circuitry (e.g., AC to DC converter circuitry) configured to convert AC power from the AC grid 130 to the DC bus 102. Power converter 124 may include communication circuitry configured to communicate with other devices connected to DC bus 102 (e.g., power devices 104, 110, DC loads 116, etc.). Power converter 124 may include control circuitry configured to connect and disconnect power converter 124 to and from the DC bus 102, and/or control communication with other devices connected to the DC bus 102. For example, power converter 124 may ramp up voltage on DC bus 102 before power devices 104, 110 are producing sufficient power (e.g., power greater than a power threshold). After power devices 104, 110 are producing sufficient power (e.g., power greater than the power threshold) then power devices 104, 110 may connect and supply power to a DC bus 102 that has already been "pre-charged" / raised / ramped up greater than a zero voltage level. In some examples, power devices 104, 110 may connect and supply power to a DC bus 102 that is already at a highest voltage level (e.g., an operating voltage level) after the DC bus 102 voltage was ramped up by power converter 124. In some examples, after a power device 104, 110 connects to the DC bus 102, the power converter 124 may switch from a power supply mode of operation to a monitoring mode of operation. Based on a determination that power converter 124 determines power is needed to be supplied from the grid 130, power converter 124 may switch back from the monitoring mode of operation to the power supply mode of operation. For example, power converter 124 may draw a minimal power sufficient to provide power to control circuitry and/or sensors, but may disconnect the AC grid 130 from the DC bus 102. Power converter 124 may be bi-directional or uni-directional. After power converter 124 is in monitoring mode, it may draw power to power control circuitry and/or sensors either from the AC grid 130 or the DC bus 102.

Power converter 126 may be connected between DC bus 102 and AC bus 122. Power converter 126 may be configured to provide power from DC bus 102 to AC grid 130. Power converter 126 may include converter circuitry (e.g., DC to AC converter circuitry) configured to convert DC power from the DC bus 102 to the AC grid 130. Power converter 126 may include communication circuitry configured to communicate with other devices connected to DC bus 102 (e.g., power devices 104, 110, DC loads 116, etc.). Power converter 126 may include control circuitry configured to connect and disconnect power converter 126 to and from the DC bus 102, and/or control communication with other devices connected to the DC bus 102. For example, power converter 124 may connect to DC bus 102 after one or more power devices 104, 110 are connected to DC bus 102 and producing sufficient power (e.g., power greater than a power threshold). AC load 132 may be connected to and receive power from AC bus 122. Power converter 128 may include grid services circuitry 128 configured to help power converter 126 connect to and provide power to AC grid 130.

Power converters 136A, 136B may be connected between DC bus 102 and AC bus 134. Power converters 136A, 136B may be configured to provide power from DC bus 102 to AC loads 138. Power converters 136A, 136B may include converter circuitry (e.g., DC to AC converter circuitry) configured to convert DC power from the DC bus 102 to the AC grid 134. Power converters 136A, 136B may include communication circuitry configured to communicate with other devices connected to DC bus 102 (e.g., power devices 104, 110, DC loads 116, etc.). Power converters 136A, 136B may include control circuitry configured to connect and disconnect the power converter to and from the DC bus 102, and/or control communication with other devices connected to the DC bus 102. Power converter 136C may be connected between DC bus 102 and AC bus 140. Power converter 136C may be configured to provide power from DC bus 102 to AC loads 142. Power converters 136 may be relatively small power converters. Separate AC buses may be configured to ensure power is provided to certain AC loads depending on different situations.

In some examples, AC bus 134 may be a DC bus 134 and loads 138 may be DC loads. Power converters 136A, 136B may be connected between DC bus 102 and DC bus 134. Power converters 136A, 136B may be configured to provide power from DC bus 102 to DC loads 138. Power converters 136A, 136B may include converter circuitry (e.g., DC to DC converter circuitry) configured to convert DC power from the DC bus 102 to the DC bus 134. Power converters 136A, 136B may include communication circuitry configured to communicate with other devices connected to DC bus 102 (e.g., power devices 104, 110, DC loads 116, etc.). Power converters 136A, 136B may include control circuitry configured to connect and disconnect the power converter to and from the DC bus 102, and/or control communication with other devices connected to the DC bus 102. In some examples, AC bus 140 may be a DC bus 140 and loads 142 may be DC loads. Power converter 136C may be connected between DC bus 102 and DC bus 140. Power converter 136C may be configured to provide power from DC bus 102 to DC loads 142. Power converters 136 may be relatively small power converters. Separate DC buses may be configured to ensure power is provided to certain DC loads depending on different situations.

A plurality of the elements of power system 100 shown in Fig. 1 may be configured to perform arc detection. For example, power devices 104, 110, DC loads 116, power converters 124, 126, 136, and AC loads 132, 138, 142, may each be configured to perform arc detection. Each of those elements may be configured to communicate with other elements of power system 200 (e.g., by sending a wired signal or wireless signal) based on an arc being detected by that element. Each of those elements may also be configured to lower an electrical input or an electrical output (e.g., current, voltage, power, etc.) related to that element based on detecting an arc. For example, each of the devices may include one or more sensor, control circuitry configured to detect an arc based on one or more sensed electrical parameters (e.g., current, voltage, power, etc.) and/or obtained data, and communication circuitry configured to send or receive communications related to arc detection.

Reference is now made to Fig. 2, which shows a power system 200. Elements of power system 200 may be the same as, or similar to, elements of power system 100 of Fig. 1.

Power system 200 may include DC bus 202, power devices 204, and DC loads 216.

DC bus 202 may be similar to DC bus 102 described above.

DC loads 216 may be similar to DC loads 116 described above. In some examples, DC loads 216 may be similar to power converters 126, 136 described above.

Power devices 204 may be similar to power devices 104, 110 described above.

For example, power device 204A may be a bi-directional power device, similar to bi-directional power devices 104 described above. Power device 204B may be a uni-directional power device, similar to uni-directional power devices 110 described above.

Power device 204A may have a bi-directional connection to supply power to or receive power from DC bus 202 at terminal T1. Power device 204B may have a uni-directional connection to supply power to DC bus 202 at terminal T2. DC load 216A may have a uni-directional connection to receive power from DC bus 202 at terminal T3, and DC load 216B may have a uni-directional connection to receive power from DC bus 202 at terminal T4.

Power device 204 may include converter circuitry 206, power source circuitry 208, control circuitry 210, sensor 212, communication circuitry 214, and memory 218.

Converter circuitry 206 may be similar to converter circuitry 108, 114 described above. For example, power device 204 may be a bi-directional power device, like bi-directional power device 104, and converter circuitry 206 may be similar to converter circuitry 108 and configured to convert power in both directions (e.g., to and from the DC bus 202). For example, power device 204 may be a uni-directional power device, like uni-directional power device 110, and converter circuitry 206 may be similar to converter circuitry 114 and may be configured to convert power in a single direction (e.g., to the DC bus 202).

Converter circuitry may include, for example, one or more: DC to DC converters (e.g., buck converters, boost converters, buck/boost converters, buck + boost converters, etc.), DC to AC converters (also referred to as inverters), combiner and/or monitoring boxes, etc. The inverters of power systems 100, 200 may be for one or more phases (e.g., one phase inverter, two phase inverter, three phase inverter, etc.), and may include lines or phases that are not shown herein for the sake of simplicity. Converter circuitry may be configured to convert an input power to an output power.

Power source circuitry 208 may be similar to charge storage circuitry 106 or power generation circuitry 112 described above. For example, power device 204 may be a bi-directional power device, like bi-directional power device 104, and converter circuitry 206 may be similar to charge storage circuitry 106 and configured to provide power to or receive power from the DC bus 202. For example, power device 204 may be a uni-directional power device, like uni-directional power device 110, and converter circuitry 206 may be similar to power generation circuitry 112 and may be configured to provide power to the DC bus 202.

Communication circuitry 214 may be configured to perform wired (e.g., power line communication [PLC]), or wireless (e.g., wi-fi) communications. Communication circuitry 214 may include transmitter circuitry and receiver circuitry. The transmitter circuitry may be configured to transmit communication signals, and the receiver circuitry may be configured to receive communication signals.

Memory 218 may be configured to store data. For example, memory 218 may be configured to store data related to one or more devices connected to the DC bus 202. For example, memory device may store a configuration profile and/or a power profile of power devices or loads connected to the DC bus 202. Power device 204 may access and use the stored data to manage the voltage on the DC bus 202. For example, power device 204 may startup to a higher voltage level based on the stored data. Power device 204 may also go to a lower voltage level based on the stored data. For example, the stored data may indicate a time of day or year or certain device, that dictates a higher voltage level or a lower voltage level.

Converter circuitry 206 may also be referred to as a power converter. Converter circuitry 206 may include direct current (DC) output terminals. One or more of the DC output terminals of converter circuitry 206 may be connected to DC bus 202 (e.g., at a terminal of DC bus 202, such as terminal T1). For example, one or more of the DC output terminals of converter circuitry 206 may be switchably connected to DC bus 202 via one or more switches.

Control circuitry 210 may also be referred to as a controller. Control circuitry 210 together with sensor 212 may be configured to measure a voltage of the DC output terminals of converter circuitry 206. Based on a determination that the measured voltage is zero, the control circuitry 210 may set the converter circuitry 206 to output a first voltage. Control circuitry 210 may set the output voltage (which may also be the voltage of the DC bus 202) to the first voltage after a predetermined time has passed while the voltage is equal to the zero voltage. Based on a determination that the measured voltage is equal to the first voltage, control circuitry 210 together with communication circuitry 214 may perform communications to query additional devices (e.g., power devices 204 and/or loads 216). The additional devices may be connected to the DC output terminals of the converter circuitry 206 via the DC bus 202. Control circuitry 210 may communicate with the additional devices using PLC communications or wireless communications. For example, control circuitry 210 may communicate with the additional devices using wireless communications before and/or after the additional devices are connected to the DC bus 202. Control circuitry 210 may send the first query after a first predetermined time has passed while the voltage is equal to the first voltage. After additional devices have responded to the query, control circuitry 210 may set the converter circuitry 206 to output a second voltage (e.g., set the voltage of the DC bus 202 to the second voltage). After additional devices have not responded to the query and a second predetermined time has passed while the voltage is equal to the first voltage, control circuitry 210 may set the converter circuitry 206 to output the second voltage.

Control circuitry 210 together with communication circuitry 214 may also be configured to, based on a determination that the voltage is equal to the second voltage, perform communications to query second additional devices. Control circuitry 210 may send the second query after a second predetermined time has passed while the voltage is equal to the second voltage. After the second additional devices have responded to the query, control circuitry 210 may set the converter circuitry 206 to output a third voltage (e.g., set the voltage of the DC bus 202 to the third voltage). After the second additional devices have not responded to the second query and a second predetermined time has passed while the voltage is equal to the second voltage, control circuitry 210 may set the converter circuitry 206 to output the third voltage.

For example, the first voltage may be below 50 volts DC. The second voltage may be between 50 volts DC and 240 volts DC. The third voltage may be between 240 volts DC and 1500 volts DC.

Control circuitry 210 together with sensor 212 may also be configured to measure a current supplied to the DC output terminals. Based on a determination that the measured current is greater than a first current threshold, control circuitry 210 may set the converter circuitry 206 to reduce the output voltage by a first predetermined amount. The first predetermined amount may be relative to the output voltage level (e.g., high voltage level, medium voltage level, low voltage level, etc.). Control circuitry 210 may reduce the output voltage (which may also be the voltage of the DC bus 202) by the first predetermined amount after a first predetermined time has passed while the measured current is greater than the first current threshold. Based on a determination that the measured current is greater than a second current threshold, control circuitry 210 may set the converter circuitry 206 to reduce the output voltage by a second predetermined amount. The second predetermined amount may be relative to the output voltage level. For example, the current may be greater than the second current threshold before and/or after the current is greater than the first current threshold. Control circuitry 210 may reduce the output voltage by the second predetermined amount after a second predetermined time has passed while the measured current is greater than the second current threshold. Based on a determination that measured the current is greater than a third current threshold, control circuitry 210 may set the converter circuitry 206 to reduce the output voltage by a third predetermined amount. The third predetermined amount may be relative to the output voltage level. In some examples, based on a determination that the measured current is greater than the third current threshold, control circuitry 210 may set the converter circuitry 206 to reduce the output voltage to a lower output voltage level (e.g., from high voltage level to low voltage level, from high voltage level to medium voltage level, from medium voltage level to low voltage level, from low voltage level to safety voltage level, from low voltage level to zero voltage level, from safety voltage level to zero voltage level, etc.). For example, the current may be greater than the third current threshold before and/or after the current is greater than the first current threshold. The current may be greater than the third current threshold before and/or after the current is greater than the second current threshold. Control circuitry 210 may reduce the output voltage by the third predetermined amount after a third predetermined time has passed while the measured current is greater than the third current threshold.

Converter circuitry 206 may have a current limit. The current thresholds may be relative to the current limit. For example, the first current threshold may be between 80% and 90% of the current limit, the second current threshold may be between 90% and 95% of the current limit, the third current threshold may be greater than 95% of the current limit, etc. The predetermined amounts may be different from one another and may be greater the closer the current is to the current limit. For example, the first predetermined amount may be relatively less than the second predetermined amount, the second predetermined amount may be relatively less than the third predetermined amount, etc. For example, the first predetermined amount may be between about 1 volt and about 2.5 volts. The second predetermined amount may be between about 2.5 volts and about 15 volts. The third predetermined amount may be between about 5 volts and about 25 volts, etc.

The DC output terminals may be connected to a DC bus. The additional devices may be connected to the DC bus. The second additional devices may be connected to the DC bus. The DC power source may be a photovoltaic power source.

The communications may be power line communications on the DC output terminals. The communications may be wireless communications.

The power converter / converter circuitry 206 may include input terminals configured to connect to a DC power source. The power converter may include DC-DC converter circuitry. The power converter may include input terminals configured to connect to an AC power source, and wherein the power converter comprises AC-DC converter circuitry.

Memory may be configured to store data related to the additional devices. Control circuitry 210 may be configured to use the data related to the additional devices and set the power converter to output the second voltage. The data may be related to at least one of: state of charge, power usage, time usage, or weather usage. State of charge data may include data related to a level of charge of a charge storage device. The level of charge may be relative to the total capacity of the charge storage device. The level of charge may be a specific numeric indication of level of charge, e.g., 10%, 40%, 70%, etc. The level of charge may be a more general indication of level of charge, e.g., low, medium, high, etc. For example, the level of charge may be a range. For example, low charge may be between about 0% to about 20%, medium charge may be between about 20% to about 70%, high charge may be between about 70% and about 100%, etc. The state of charge data may be used to determine an expected power consumption (e.g., energy usage) or power usage of the additional device. Power usage data may include data related to typical power usage. The power usage data may be a specific numeric indication, e.g., about 80 W, about 500 W, about 1 kW, etc. The power usage may be a more general indication of power usage, e.g., low, medium, high, etc. For example, low power usage, medium power usage, high power usage. For example, the power usage may be a range. For example, low power usage may be between about 0.5 W to about 200 W, medium power usage may be between about 200 W to about 1 kW, high power usage may be between about 1 kW and about 3 kW, etc. The power usage data may be used to determine an expected power consumption (e.g., energy usage) of the additional device. Time data may be related to time of typical usage of an additional device. For example, the time data may include minutes, hours, days, time of day, month, year, etc. For example, the time data may be a specific numeric indication, e.g., about 10 minutes, about 60 minutes, about 3 hours, about 8 am, about July, etc. The power usage may be a more general indication of power usage, e.g., short, medium, long etc. For example, the time may be a range (e.g., of minutes, hours, days, weeks, months, years, etc.). The time may be morning, afternoon, evening, weekday, weekend, season (e.g., summer, winter, etc.) The time data may be used to determine an expected power consumption (e.g., energy usage) of the additional device. Energy usage data may be determined using power data and time data to determine typical expected power consumption data of an additional device. Weather data may be related to weather of typical usage of an additional device. For example, the weather data may include specific numeric indication, e.g., about a certain temperature, humidity, wind speed, irradiance from the sun, etc. The weather may be a more general indication, e.g., warm weather, cold weather, rain, snow, cloudy, sunny, etc. The weather data may be used to determine an expected power consumption (e.g., energy usage) or power usage of the additional device.

As mentioned above, each power device 204 and load 216 may be configured to perform arc detection, and to communicate and/or control electrical input or electrical output based on detecting an arc. Control circuitry may be configured to control converter circuitry and/or one or more switches to reduce the electrical input or electrical output.

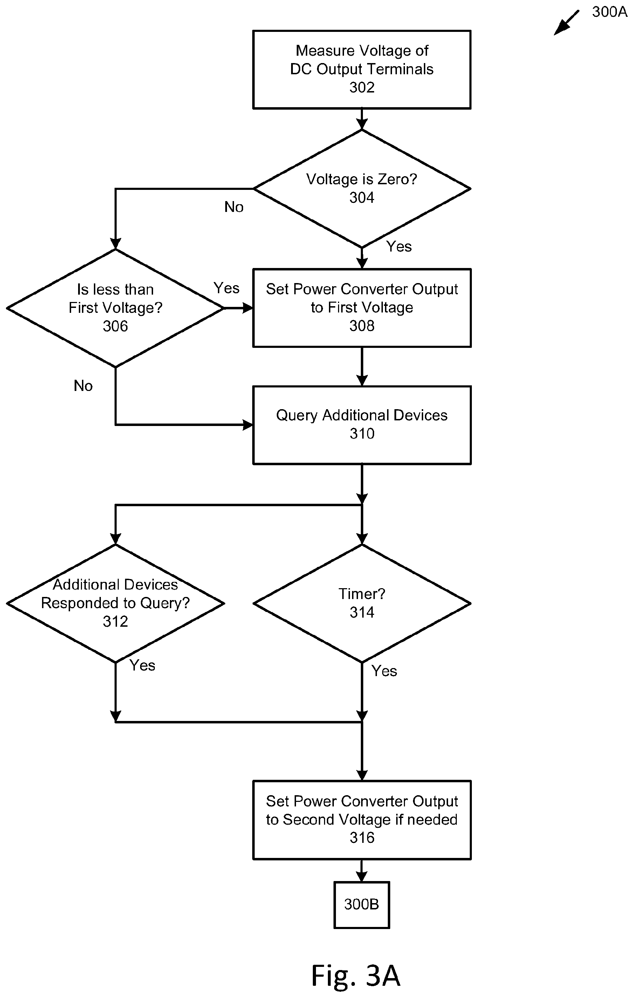

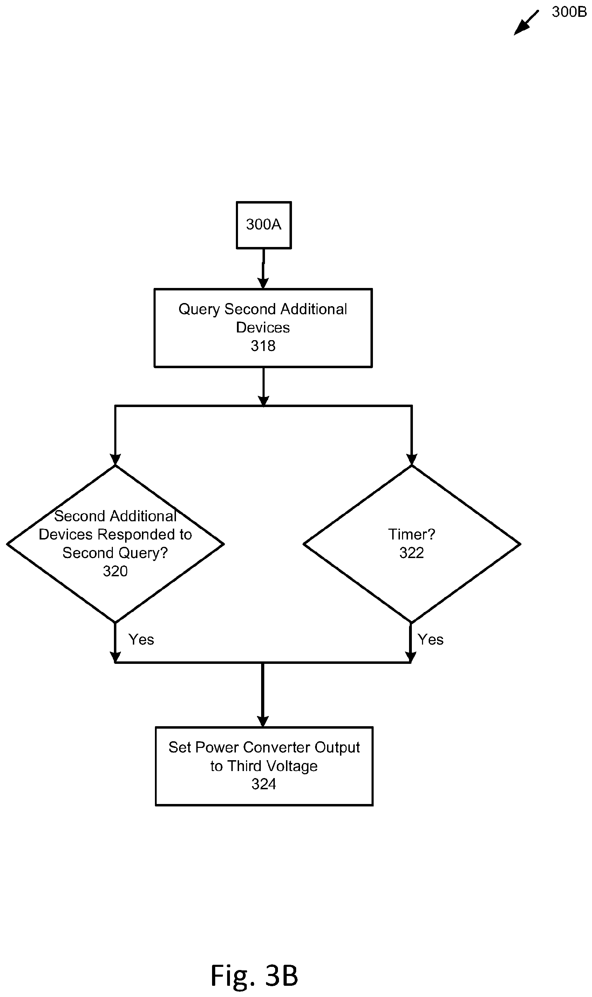

Reference is now made to Fig. 3A and Fig. 3B which show an example method 300A, 300B for managing a DC bus 102, 202. Method 300A, 300B may be performed by control circuitry 210.

In step 302, control circuitry 210 together with sensor 212 measures a voltage related to DC output terminals (e.g., across DC output terminals, between a DC output terminal and a ground terminal or a neutral terminal, etc.).

In step 304, control circuitry 210 determines whether the measured voltage is a zero voltage (e.g., about zero volts, within a range of about zero volts, etc.).

Based on a determination that control circuitry 210 determines that the measured voltage is a zero voltage (e.g., for a predetermined amount of time), control circuitry 210 may proceed to step 308.

Based on a determination that control circuitry 210 determines that the measured voltage is not a zero voltage, control circuitry 210 may proceed to step 306.

In step 306, control circuitry 210 determines whether the measured voltage is less than a first voltage level (e.g., about a first voltage value or within a first voltage range, such as, a safety voltage level or a low voltage level).

Based on a determination that control circuitry 210 determines that the measured voltage is not less than the first voltage level, control circuitry 210 may proceed to step 310.

Based on a determination that control circuitry 210 determines that the measured voltage is less than the first voltage level, control circuitry 210 may proceed to step 308.

In step 308, control circuitry 210 sets a power converter output (e.g., the output of converter circuitry 206 connected to the DC bus) to the first voltage level.

In step 310, control circuitry 210 queries additional devices connected to the DC bus (e.g., after a predetermined amount of time that the output has been set to the first voltage level).

In step 312, control circuitry 210 determines whether the additional devices responded to the query. Based on a determination that control circuitry 210 determines that the additional devices have responded to the query, control circuitry 210 may proceed to step 316.

In step 314, control circuitry 210 determines whether a predetermined time since the query has been reached. Based on a determination that control circuitry 210 determines that the predetermined time since the query has been reached, control circuitry 210 may proceed to step 316.

In step 316, control circuitry 210 sets the power converter output to a second voltage level (e.g., about a second voltage value or within a second voltage range, such as, a low voltage level or a medium voltage level).

After step 316 control circuitry 210 may proceed to step 318 of Fig. 3B.

In step 318, control circuitry 210 queries second additional devices connected to the DC bus (e.g., after a predetermined amount of time that the output has been set to the second voltage).

In step 320, control circuitry 210 determines whether the second additional devices responded to the second query. Based on a determination that control circuitry 210 determines that the second additional devices have responded to the second query, control circuitry 210 may proceed to step 324.

In step 322, control circuitry 210 determines whether a predetermined time since the second query has been reached. Based on a determination that control circuitry 210 determines that the predetermined time since the second query has been reached, control circuitry 210 may proceed to step 324. Each predetermined time may be different than or the same as the other predetermined times.

In step 324, control circuitry 210 sets the power converter output to a third voltage level (e.g., about a third voltage value or within a third voltage range, such as, a medium voltage level or a high voltage level).

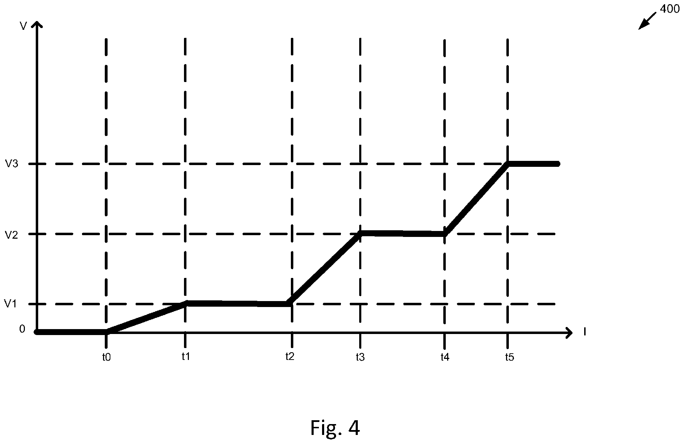

Reference is now made to Fig. 4 which shows an example graph. The graph of Fig. 4 is described below with reference to method 300A of Fig. 3A and method 300B of Fig. 3B.

Between time 0 and time t0, control circuitry 210 determines that the measured voltage is a zero voltage level (e.g., about zero volts, within a range of about zero volts, etc.), as in step 302 and step 304 of Fig. 3A.

Between time t0 and time t1, control circuitry 210 sets the voltage to the first voltage level, as in step 308 of Fig. 3A. The first voltage level may be a safety voltage level, a low voltage level, etc. The first voltage level may be a voltage value or a range of voltage values (e.g., about voltage V1, between zero volts and voltage V1, between a percentage of voltage V1 and voltage V1, etc.).

Between time t1 and time t2, control circuitry 210 queries additional devices and the additional devices respond to the query or the control circuitry 210 determines a time threshold has been met or exceeded, as in step 310, step 312, and step 314 of Fig. 3A.

Between time t2 and time t3, control circuitry 210 sets the voltage to the second voltage level, as in step 316 of Fig. 3A. The second voltage level may be a low voltage level, a medium voltage level, etc. The second voltage level may be a voltage value or a range of voltage values (e.g., about voltage V2, between voltage V1 and voltage V2, between a percentage of voltage V2 and voltage V2, etc.).

Between time t3 and time t4, control circuitry 210 queries second additional devices and the second additional devices respond to the second query or the control circuitry 210 determines a second time threshold has been met or exceeded, as in step 318, step 320, and step 322 of Fig. 3B.

Between time t4 and time t5, control circuitry 210 sets the voltage to the third voltage level, as in step 324 of Fig. 3B. The third voltage level may be a medium voltage level, a high voltage level, etc. The third voltage level may be a voltage value or a range of voltage values (e.g., about voltage V3, between voltage V2 and voltage V3, between a percentage of voltage V3 and voltage V3, etc.).

In a similar fashion to ramping up voltage from a lower voltage to a higher voltage (e.g., from zero volts to V3 as shown in Fig. 4), voltage may also be ramped down from a higher voltage to a lower voltage (e.g., from V3 to zero volts, from V3 to V2, from V3 to V1, from V2 to V1, etc.). For example, voltage may be ramped down to disconnect one or more elements (for example, a power source) from the DC bus.

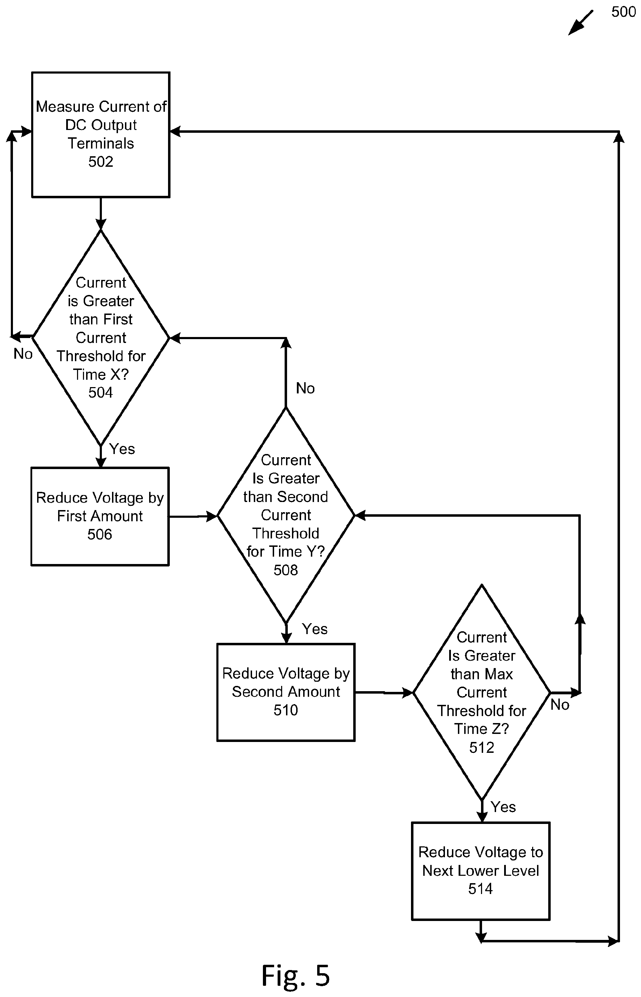

Reference is now made to Fig. 5 which shows an example method 500 for managing a DC bus 102, 202. Method 500 may be performed by control circuitry 210.

In step 502, control circuitry 210 together with sensor 212 measures a current related to DC output terminals.

In step 504, control circuitry 210 determines whether the measured current is greater than a first current threshold (e.g., about a first current value or within a first current range, such as, about 80% of a current limit) for a predetermined time X.

Based on a determination that control circuitry 210 determines that the measured current is greater than the first current threshold for predetermined time X, control circuitry 210 may proceed to step 506.

Based on a determination that control circuitry 210 determines that the measured current is not greater than the first current threshold for predetermined time X, control circuitry 210 may return to step 504.

In step 506, control circuitry 210 reduces the power converter output by a first amount (e.g., about a first voltage value, which may be a percentage of the output voltage level).

In step 508, control circuitry 210 determines whether the measured current is greater than a second current threshold (e.g., about a second current value or within a second current range, such as, about 90% of a current limit) for predetermined time Y. Predetermined time Y may be the same value as or a different value than predetermined time X. Predetermined time Y may be continuation of predetermined time X (e.g., time Y = time X + time T1).

Based on a determination that control circuitry 210 determines that the measured current is greater than the second current threshold for predetermined time Y, control circuitry 210 may proceed to step 510.

Based on a determination that control circuitry 210 determines that the measured current is not greater than the second current threshold for predetermined time Y, control circuitry 210 may return to step 504.

In step 510, control circuitry 210 reduces the power converter output by a second amount (e.g., about a second voltage value, which may be a percentage of the output voltage level). The second amount may be the same as or different than the first amount (e.g., may be greater than or less than).

In step 512, control circuitry 210 determines whether the measured current is greater than a third current threshold, which may be a maximum current threshold (e.g., about a third current value or within a third current range, such as, about 95% of a current limit) for predetermined time Z Predetermined time Z may be the same as or different than predetermined time X or predetermined time Y. Predetermined time Z may be continuation of predetermined time X and/or predetermined time Y (e.g., time Z = time X + time Y+ time T2, time Z = time X + time T2, time Z = time Y + time T2, etc.).

Based on a determination that control circuitry 210 determines that the measured current is greater than the third current threshold (e.g., the maximum current threshold) for predetermined time Z, control circuitry 210 may proceed to step 514.

Based on a determination that control circuitry 210 determines that the measured current is not greater than the third current threshold (e.g., the maximum current threshold) for predetermined time Z, control circuitry 210 may return to step 508.

In step 514, control circuitry 210 reduces the power converter output to the next lower voltage level (e.g., from high to medium, from medium to low, from low to safety, etc.) In some examples control circuitry 210 may reduce the power converter output by a third amount (e.g., about a third voltage value, which may be a percentage of the output voltage level). The second amount may be the same as or different than the first amount and/or the second amount (e.g., may be greater than or less than).

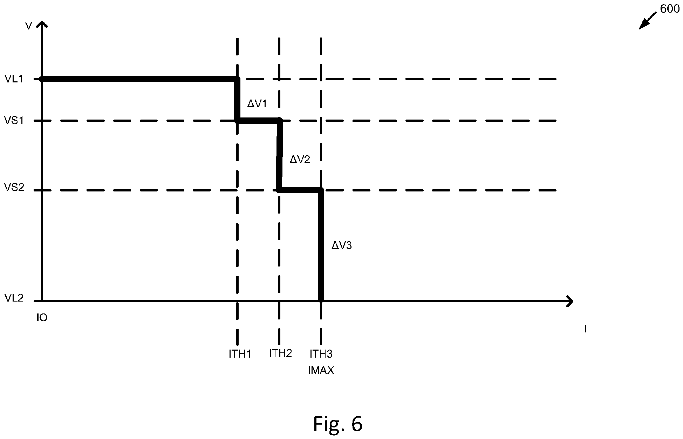

Reference is now made to Fig. 6 which shows an example graph. The graph of Fig. 6 is described below with reference to method 500 of Fig. 5.

The voltage of the DC bus may be set to one of the non-zero voltage levels VL1 (e.g. high voltage, medium voltage, low voltage, safety voltage, etc.). That voltage level VL1 may have a current limit of Imax (which may be less than a current rating for a power device). The first current threshold ITH1 may be a percentage of the current limit Imax further away from the current limit Imax than the second current threshold ITH2. The current limit IMAX may be the third current threshold. In some examples, there may be more or less current thresholds.

For voltage level VL1, while the current is between current IO and first current threshold ITH1 the voltage may be set by control circuitry 210 to the full voltage level VL1 for the DC bus 102, 202. Based on a determination that the measured current is greater than the first current threshold ITH1 for a predetermined time X, control circuitry 210 may lower the voltage, as in step 504 and step 506 of Fig. 5. The first voltage amount ΔV1 may be a relatively small amount compared to the voltage level and the second voltage amount ΔV2. The lower voltage level that is the difference between voltage level VL1 and the first voltage amount ΔV1 may be referred to as a first voltage sub-level VS1.

Based on a determination that the current is between first current threshold ITH1 and second current threshold ITH2, the voltage may be set by control circuitry 210 to the first voltage sub-level VS1 for the DC bus 102, 202. Based on a determination that the measured current is greater than the second current threshold ITH2 for a predetermined time Y, control circuitry 210 may lower the voltage to a second, lower sub-level, as in step 508 and step 510 of Fig. 5. The second voltage amount ΔV2 may be a relatively larger amount compared to the first voltage amount ΔV1. The lower voltage level that is the difference between the first voltage sub-level VS1 and the second voltage amount ΔV2 may be referred to as a second voltage sub-level VS2. In some examples there may be more or less safety voltage levels. In some examples (e.g., based on a determination that the current is greater than the second current threshold ITH2 for a predetermined time Y without first being greater than the first current threshold ITH1 for a predetermined time X) control circuitry 201 may lower the voltage from the voltage level VL1 directly to the second voltage sub-level VS2 (without first lowering the voltage just the first amount ΔV1from the voltage level VL1 to the first voltage sub-level VS1). Control circuitry 201 may lower the voltage from the voltage level VL1 by the sum of the first voltage amount ΔV1 and the second voltage amount ΔV2.

Based on a determination that the current is between second current threshold ITH2 and third current threshold IMAX the voltage may be set by control circuitry 210 to the second voltage sub-level VS2 for the DC bus 102, 202. Based on a determination that the measured current is greater than the third current threshold IMAX for a predetermined time Z, control circuitry 210 may lower the voltage to a lower voltage level for the DC bus 102, 202, as in step 512 and step 514 of Fig. 5. The third voltage amount ΔV3 may be a relatively larger amount compared to the first voltage amount ΔV1 and the second voltage amount ΔV2. The lower voltage level may be a non-zero voltage level VL2 (e.g. medium voltage, low voltage, safety voltage, etc.) or a zero voltage level. After control circuitry 210 has lowered the voltage level from the first higher voltage level VL1 to the second lower voltage level VL2, the method of Fig. 5 may be repeated for the lower voltage level VL2.

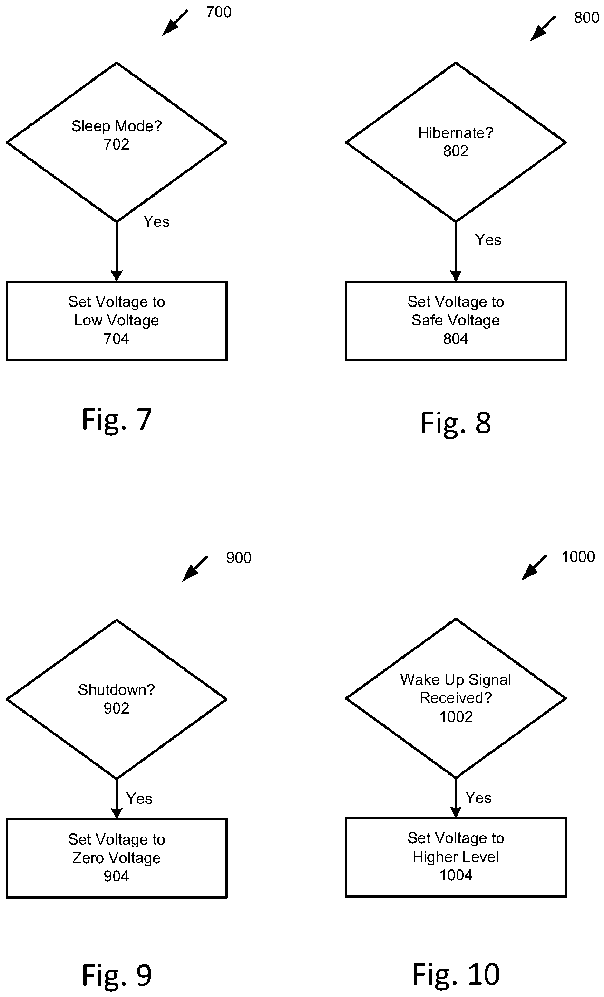

Reference is now made to Fig. 7 which shows an example method 700 for managing a DC bus 102, 202. Method 700 may be performed by control circuitry 210.

In step 702, control circuitry 210 determines whether a power device 104, 110, 204 should operate in a sleep mode of operation.

Based on a determination that control circuitry 210 determines that the power device 104, 110, 204 should operate in the sleep mode of operation, control circuitry 210 may proceed to step 704.

In step 704, control circuitry 210 sets the power converter output to a low voltage level.

Reference is now made to Fig. 8 which shows an example method 800 for managing a DC bus 102, 202. Method 800 may be performed by control circuitry 210.

In step 802, control circuitry 210 determines whether a power device 104, 110, 204 should operate in a hibernate mode of operation.

Based on a determination that control circuitry 210 determines that the power device 104, 110, 204 should operate in the hibernate mode of operation, control circuitry 210 may proceed to step 804.

In step 804, control circuitry 210 sets the power converter output to a safe voltage level.

Reference is now made to Fig. 9 which shows an example method 900 for managing a DC bus 102, 202. Method 900 may be performed by control circuitry 210.

In step 902, control circuitry 210 determines whether a power device 104, 110, 204 should operate in a shutdown mode of operation.

Based on a determination that control circuitry 210 determines that the power device 104, 110, 204 should operate in the shutdown mode of operation, control circuitry 210 may proceed to step 904.

In step 904, control circuitry 210 sets the power converter output to a zero voltage level.

Reference is now made to Fig. 10 which shows an example method 1000 for managing a DC bus 102, 202. Method 1000 may be performed by control circuitry 210.

In step 1002, control circuitry 210 determines whether a power device 104, 110, 204 received a wake up signal.

Based on a determination that control circuitry 210 determines that the power device 104, 110, 204 received a wake up signal, control circuitry 210 may proceed to step 1004.

In step 1004, control circuitry 210 sets the power converter output to a higher voltage level (e.g., from zero to safety, from safety to low, from zero to low, etc.).

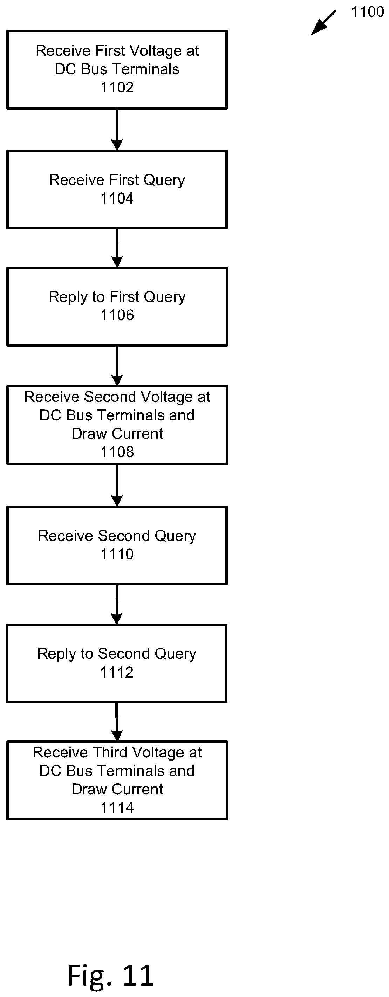

Reference is now made to Fig. 11 which shows an example method 1100 for managing a DC bus 102, 202. Method 1100 may be performed by control circuitry of a power device or control circuitry of a DC load.

In step 1102, the control circuitry receives a first voltage at DC bus terminals (e.g., across DC input terminals, DC input terminal and a ground terminal or a neutral terminal, etc.). The first voltage may be a first voltage level (e.g., a safety voltage level or low voltage level provided by a power device connected to the DC bus via one or more output terminals). The device of the control circuitry may draw current from the power device connected to the DC bus.

In step 1104, the control circuitry receives a first query (e.g., using PLC or wireless communication). The first query may be regarding voltage level or power usage, or to provide a configuration profile. The first query may be regarding whether the device of the control circuitry may supply power or operate at a higher voltage level.

In step 1106, the control circuitry replies to the first query (e.g., using PLC or wireless communication). For example, the control circuitry may reply that the device of the control circuitry may supply power or operate at a higher voltage level.

In step 1108, the control circuitry receives a second voltage at DC bus terminals (e.g., across DC input terminals, DC input terminal and a ground terminal or a neutral terminal, etc.). The second voltage may be a second voltage level (e.g., a low voltage level or medium voltage level provided by a power device connected to the DC bus via one or more output terminals). The second voltage level may be greater than the first voltage level. The device of the control circuitry may draw current from the power device connected to the DC bus.

In step 1110, the control circuitry receives a second query (e.g., using PLC or wireless communication). The second query may be regarding voltage level or power usage, or to provide a configuration profile. The second query may be regarding whether the device of the control circuitry may supply power or operate at a higher voltage level.

In step 1112, the control circuitry replies to the second query (e.g., using PLC or wireless communication). For example, the control circuitry may reply that the device of the control circuitry may supply power or operate at a higher voltage level.

In step 1114, the control circuitry receives a third voltage at DC bus terminals (e.g., across DC input terminals, DC input terminal and a ground terminal or a neutral terminal, etc.). The third voltage may be a third voltage level (e.g., a medium voltage level or high voltage level provided by a power device connected to the DC bus via one or more output terminals). The third voltage level may be greater than the first voltage level and the second voltage level. The device of the control circuitry may draw current from the power device connected to the DC bus.

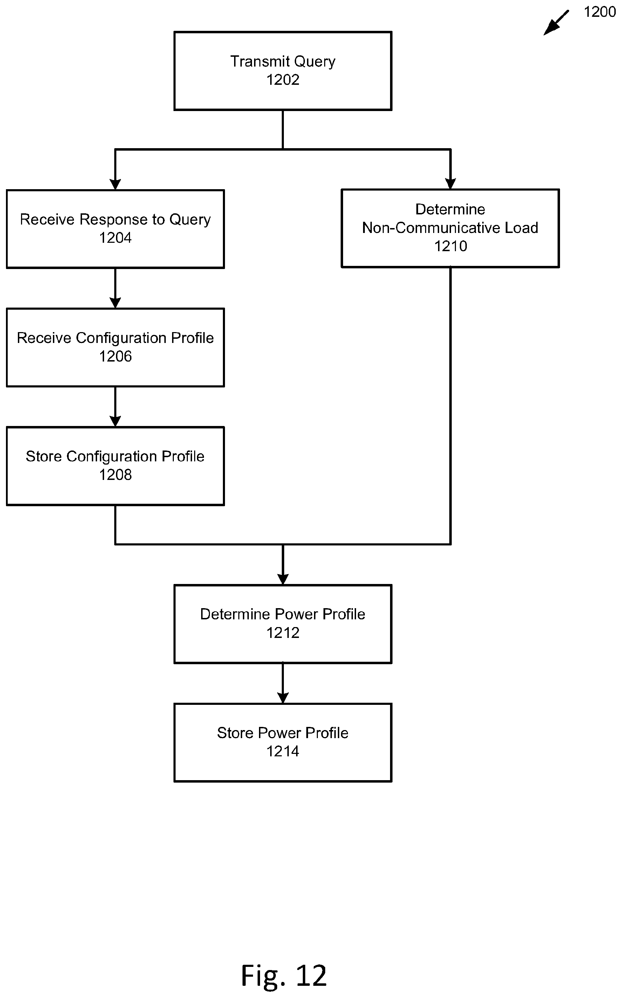

Reference is now made to Fig. 12 which shows an example method 1200 for managing a DC bus 102, 202. Method 1200 may be performed by control circuitry 210.

In step 1202, control circuitry 210 transmits a query (e.g., using PLC or wireless communication) to additional devices. The query may be regarding voltage level or power usage, or to provide a configuration profile.

In step 1204, control circuitry 210 receives a reply to the query (e.g., using PLC or wireless communication) from an additional device.

In step 1206, control circuitry 210 receives a configuration profile related to the additional device. Control circuitry 210 may receive the configuration profile together with the reply to the query (received in step 1204). Control circuitry 210 may receive the configuration profile from memory 218. The configuration profile may include power usage data, voltage levels data, time usage data [hour, day, month, etc.], weather usage data, etc. Some examples of the data are described above.

In step 1208, control circuitry 210 stores the configuration profile in memory 218.

In step 1210, control circuitry 210 determines a non-communicative load is connected to the DC bus (e.g., at DC bus terminals). For example, control circuitry 210 may determine a non-communicative load is connected to the DC bus after no response to the transmitted query (transmitted in step 1202) is received within a predetermined time. For example, control circuitry 210 may determine a non-communicative load is connected to the DC bus based on a measured increase in current (e.g., drawn from the power device by the load).

In step 1212, control circuitry 210 determines a power profile related to the additional device (e.g., communicative load or non-communicative load). Control circuitry 210 may determine the power profile by monitoring the power usage of the additional device. The power profile may include power usage data, voltage levels data, time usage data [hour, day, month, etc.], weather usage data, etc. Some examples of the data are described above.

In step 1214, control circuitry 210 stores the power profile in memory.

Control circuitry may later access the stored configuration profile (stored in step 1208) and/or the stored power profile (stored in step 1214) for use in determining lowering the voltage level from a higher voltage level to a lower voltage level, or raising the voltage level from a lower voltage level to a higher voltage level.

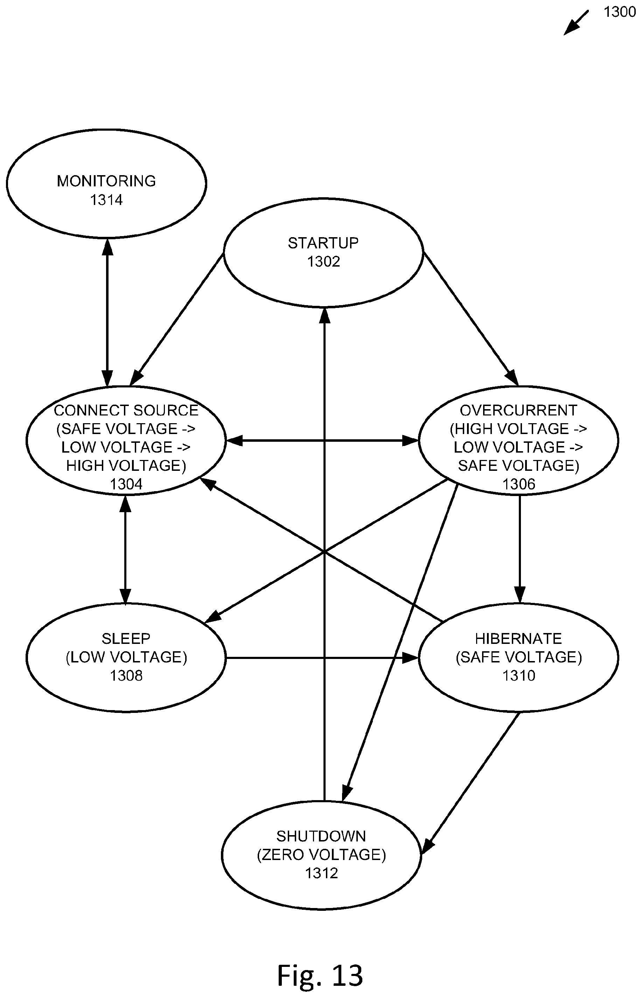

Reference is now made to Fig. 13 which shows an example state diagram 1300 for managing a DC bus 102, 202. State diagram 1300 may relate to states of control circuitry 210 of a power device 104, 110, 204.

Control circuitry 210 may start in a startup state 1302. In the startup state 1302 there may initially be zero voltage on the DC bus and control circuitry 210 of power device may set the DC bus voltage (e.g., the power device output voltage) to an initial voltage level. For example, control circuitry 210 may set the DC bus voltage to a safety voltage level. For example, control circuitry 210 may set the DC bus voltage to a higher voltage level (e.g., low voltage level, medium voltage level, etc.) based on a configuration profile and/or power profile (e.g., stored in memory of the control circuitry 210).

From the startup state 1302, control circuitry 210 may go to a connect source state 1304. In the connect source state 1304, control circuitry 210 may ramp up and set the DC bus voltage to higher bus voltages. Control circuitry 210 may ramp up and set the DC bus voltage to higher bus voltages based on responses to queries from additional devices, communications from additional devices, a configuration profile, a power profile, a predetermined time threshold, etc. For example, in the connect source state 1304, control circuitry 210 may ramp up the DC bus voltage from a safe voltage level to a low voltage level to a medium voltage level to a high voltage level. In the connect source state 1304 if a second power device with a higher voltage output connects to the DC bus, then the control circuitry 210 of that second power device may take over as a primary control circuitry 210. The other control circuitry 210 of the first power device with the lower voltage output may switch to a secondary role, disconnect the power source circuitry from the DC bus, and/or switch to a monitoring mode of operation. If, later, the second power device produces a lower voltage, then the control circuitry 210 of the first power device or control circuitry 210 of a third power device that is producing a higher output voltage may take over as the primary control circuitry 210.

From the connect source state 1304, control circuitry 210 may go to a monitoring state 1314. In the monitoring state 1314, control circuitry 210 operates in the monitoring mode of operation. Control circuitry 210 may go to a monitoring state 1314 after a second power device outputting a greater voltage connects to the DC bus. In such a case, the control circuitry may switch to a secondary role and the control circuitry 210 of the second power source may assume a primary role. After control circuitry 210 of the first power device goes to the monitoring state 1314, the control circuitry 210 of the second power device may continue to operate in the connect source state 1304.

From the monitoring state 1314, control circuitry 210 may go back to the connect source state 1304. For example, control circuitry 210 may return to the connect source state 1304 after the second power device is producing a lower output voltage than the first power device.

From the startup state 1302, control circuitry 210 may go to an overcurrent detection state 1306. In the overcurrent detection state 1306, control circuitry may monitor whether current thresholds are exceeded for a predetermined amount of time, and lower voltage accordingly (e.g., either by an amount of voltage that is a percentage of the voltage level, or to a lower voltage level).

From the connect source state 1304, control circuitry 210 may also go to the overcurrent detection state 1306.

From the connect source state 1304, control circuitry 210 may go to the sleep (low voltage) state 1308. In the sleep state 1308, control circuitry 210 may lower the DC bus voltage (e.g., the power device output voltage) to a lower voltage level. Control circuitry 210 may go to the sleep (low voltage) state 1308 based on a measured decrease in current drawn from the power device for a predetermined amount of time, a configuration profile, a power profile, other data (time of day, time of year, weather, etc.), to help decrease current in response to an overcurrent condition, etc.

From the sleep (low voltage) state 1308, control circuitry 210 may go back to the connect source state 1304. In the connect source state 1304, control circuitry 210 may raise the DC bus voltage (e.g., the power device output voltage) to a higher voltage level.

From the sleep (low voltage) state 1308, control circuitry 210 may go to a hibernate (safe voltage) state 1310. In the hibernate state 1310, control circuitry 210 may lower the DC bus voltage (e.g., the power device output voltage) to a lower voltage level. Control circuitry 210 may go to the hibernate (safety voltage) state 1310 based on a measured decrease in current drawn from the power device for a predetermined amount of time, a configuration profile, a power profile, other data (time of day, time of year, weather, etc.), to help decrease current in response to an overcurrent condition, etc.

From the hibernate (safe voltage) state 1310, control circuitry 210 may go back to the connect source state 1304. In the connect source state 1304, control circuitry 210 may raise the DC bus voltage (e.g., the power device output voltage) to a higher voltage level.

From the hibernate (safe voltage) state 1310, control circuitry 210 may go to a shutdown voltage (zero voltage) state 1304. In the shutdown state 1312, control circuitry 210 may lower the DC bus voltage (e.g., the power device output voltage) to a zero voltage level.

From the overcurrent detection state 1306, control circuitry 210 may go to the connect source state 1304. In the connect source state 1304, control circuitry 210 may maintain the DC bus voltage (e.g., the power device output voltage) at a high voltage level.

From the overcurrent detection state 1306, control circuitry 210 may go to the sleep (low voltage) state 1308. In the sleep (low voltage) state 1308, control circuitry 210 may lower the DC bus voltage (e.g., the power device output voltage) to a lower voltage level.

From the overcurrent detection state 1306, control circuitry 210 may go to the hibernate (safety voltage) state 1310. In the hibernate (safety voltage) state 1310, control circuitry 210 may lower the DC bus voltage (e.g., the power device output voltage) to a lower voltage level.

From the overcurrent detection state 1306, control circuitry 210 may go to the shutdown (zero voltage) state 1312. In the shutdown state 1312, control circuitry 210 may lower the DC bus voltage (e.g., the power device output voltage) to a zero voltage level.

From the shutdown (zero voltage) state 1310, control circuitry 210 may go back to the startup state 1302.

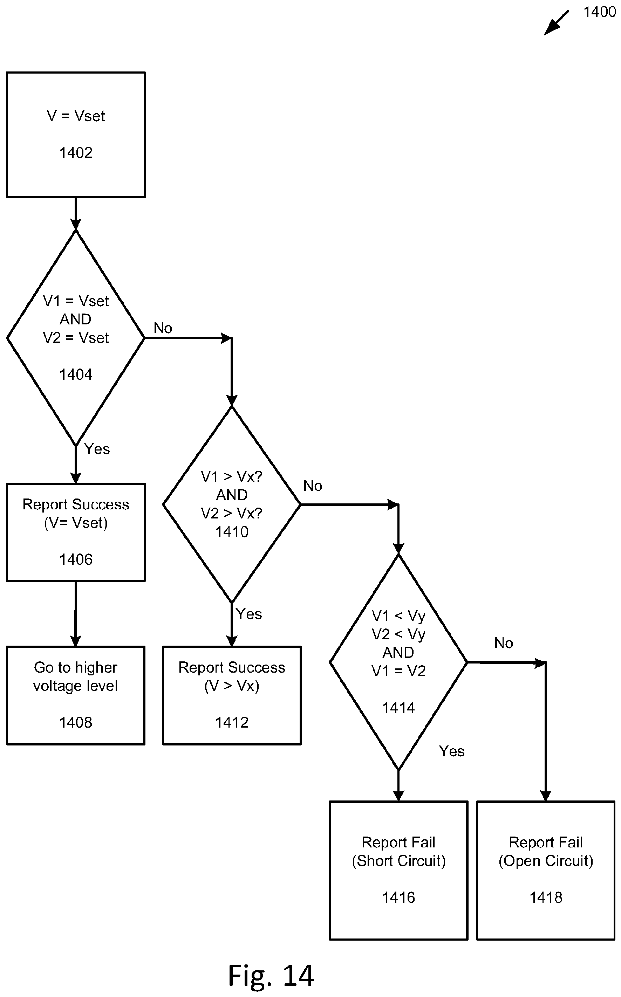

Reference is now made to Fig. 14 which shows an example method 1400 for managing a DC bus 102, 202. Method 1400 may be performed by control circuitry 210. Method 1400 may be performed to pre-charge a DC bus. The DC bus may be a DC bus that is internal to an electrical device or a DC bus that is external to the electrical device. The electrical device may include converter circuitry. The electrical device may include one or more capacitors that are pre-charged before connecting to an external DC bus. Pre-charging the one or more capacitors may help prevent an inrush current when connecting the electrical device to the external DC bus. The electrical device may include one or more DC power sources (e.g., one or more batteries) configured to charge the capacitors when the DC power source is connected to the one or more capacitors through the converter circuitry. The converter circuitry may include one or more transistors or soft switch relays which may be turned ON to pass a current from a DC power source to the capacitor before one or more other switches or relays are closed to connect the electrical device to the DC bus (for example, via the one or more relays). The converter circuitry may include one or more transistors or soft switch relays which may be turned ON to pass a current from a DC power source to the capacitor before one or more other switches or relays are closed to connect the capacitor to the DC power source via one or more relays. Method 1400 may be performed to raise a DC bus from a lower voltage level to a higher voltage level. For example, method 1400 may be performed to raise a DC bus to a safety voltage level, a low voltage level, a medium voltage level, a high voltage level, etc.

In step 1402, control circuitry 210 sets the target DC bus voltage. For example, control circuitry 210 may control converter circuitry to connect the DC power source to a capacitor. Before step 1402 the control circuitry may determine that a voltage of the device is less than a threshold voltage (for example, less than 12 V, less than 30 V, less than 50 V, less than 60 V, less than 100 V, etc.). The threshold voltage may be one of the voltage levels discussed herein (e.g., safety voltage level, low voltage level, medium voltage level, high voltage level, etc.). The control circuitry 210 may begin method 1400 based on the determination that the voltage of the device is less than the threshold voltage. Alternatively, the control circuitry 210 may begin method 1400 based on the determination that the voltage of the device is less than a different threshold voltage. The target DC bus voltage may be the threshold voltage. Alternatively, the target DC bus voltage may be less than the threshold voltage. For example, the target DC bus voltage may be a safety voltage level voltage and the threshold voltage may be a medium voltage level voltage. For example, based on a determination that a voltage of a device (e.g., at a capacitor of the device) is less than 60 V, the control circuitry may set the target DC bus voltage at 50 V. The control circuitry may use converter circuitry (e.g., buck, boost, buck + boost, buck/boost, etc.) to connect a DC power source (e.g., a battery or a generator with a DC output, for example an AC generator with AC/DC converter circuitry, or a PV module or an electric vehicle that outputs DC) to a capacitor of the device to pre-charge the capacitor on an internal DC bus of the device before the device is connected to an external DC bus. The DC power source may have a voltage that is about equal to the target DC voltage. For example, the DC power source may have a voltage of about 50 V. In some examples, the target DC voltage may be based on a profile of the device.

In step 1404, control circuitry 210 determines whether a first voltage and a second voltage are equal to the target DC voltage. In some examples, control circuitry 210 may also determine whether the first voltage is equal to the second voltage. For example, the first voltage may be a voltage at the DC power source (e.g., a DC battery voltage) and the second voltage may be a voltage at a capacitor of the device. The control circuitry 210 may determine whether the capacitor voltage and the DC power source voltage are both equal to 50 V. Step 1404 may be performed a time period (e.g., milliseconds, seconds, tens of seconds, etc.) after step 1402. Based on a determination by control circuitry 210 in step 1404 that both the first voltage and the second voltage are equal to the target DC voltage, then the method proceeds to step 1406. Based on a determination by control circuitry 210 in step 1404 that both the first voltage and the second voltage are not equal to the target DC voltage, the method proceeds to step 1410.

In step 1406 the control circuitry 210 may end the setting of the DC bus voltage. Control circuitry 210 may send a communication signal indicating that the setting of the DC bus voltage has been completed. The control circuitry 210 may report that the first voltage and the second voltage are both equal to the target DC voltage. The control circuitry 210 may report that the first voltage and the second voltage are equal to each other. The method may proceed to step 1408.

In step 1408 the control circuitry 210 may control the device to go to a higher voltage level. For example, control circuitry 210 may close one or more switches or relays to connect the electrical device to the DC bus (e.g., to connect an internal DC bus of the device to an external DC bus). For example, the target DC voltage may be a relatively low voltage (e.g., a safety voltage level, for example, 50 V). After setting the voltage to the target DC voltage, the control circuitry may control the device to go to a higher voltage level (e.g., low voltage level, medium voltage level, high voltage level, etc.).

In step 1410, control circuitry 210 determines whether the first voltage and the second voltage are greater than a first threshold DC voltage. The first threshold DC voltage may be a relatively high DC voltage. For example, the target DC voltage may be a relatively low voltage (e.g., a safety voltage level, for example, 50 V) and the first threshold voltage level may be relatively greater voltage level (e.g., a medium voltage level or a high voltage level, for example, 350 V or 400 V). For example, the control circuitry 210 may determine whether the first voltage (which may be a voltage at the DC power source) and the second voltage (which may be a voltage at a capacitor of the device) are greater than a first threshold voltage that is greater than the set voltage value. For example, the control circuitry 210 may determine that both the capacitor voltage and the DC power source voltage are greater than 400 V (even if they are not equal to each other). Based on a determination by control circuitry 210 in step 1410 that both the first voltage and the second voltage are greater than the target DC voltage, then the method proceeds to step 1412. Based on a determination by control circuitry 210 in step 1410 that both the first voltage and the second voltage are not greater than the target DC voltage, then the method proceeds to step 1414.

In step 1412 the control circuitry 210 may end the setting of the DC bus voltage. Control circuitry 210 may send a communication signal indicating that the setting of the DC bus voltage has been completed. The control circuitry 210 may report that both the first voltage and the second voltage are greater than the first threshold voltage. The control circuitry 210 may report that the first voltage and the second voltage are not equal. Control circuitry 210 may close one or more switches or relays to connect the electrical device to the DC bus (e.g., to connect an internal DC bus of the device to an external DC bus).

In step 1414, control circuitry 210 determines whether the first voltage is equal to the second voltage, and whether both the first voltage and the second voltage are less than a second threshold voltage. The second threshold DC voltage may be a relatively lower DC voltage than the target DC voltage. For example, the target DC voltage may be a relatively low voltage (e.g., a safety voltage level, for example, 50 V) and the first threshold voltage level may be a relatively lower voltage level (e.g., a minimal DC threshold voltage, for example, the minimal threshold voltage may be less than 1 V, about 1 V, about 3 V, etc.). For example, the control circuitry 210 may determine whether the first voltage (which may be a voltage at the DC power source) and the second voltage (which may be a voltage at a capacitor of the device) are less than the second threshold voltage that is less than the set voltage value, and that the first voltage is equal to the second voltage. For example, the control circuitry 210 may determine that both the capacitor voltage and the DC power source voltage are less than 1 V and that they are equal to each other. Based on a determination by control circuitry 210 in step 1414 that both the first voltage and the second voltage are less than the second threshold voltage and that the first voltage and the second voltage are equal to one another, then the method proceeds to step 1416. Based on a determination by control circuitry 210 in step 1410 that both the first voltage and the second voltage are not less than the second threshold voltage or that the first voltage and the second voltage are not equal to one another, then the method proceeds to step 1418.

In step 1416 the control circuitry 210 may report a failing of the setting of the DC bus voltage. Control circuitry 210 may send a communication signal indicating that the setting of the DC bus voltage has not been completed. The control circuitry 210 may report that the first voltage and the second voltage are equal and both less than the second threshold voltage (e.g., a minimal DC voltage). The control circuitry report may include an indication of a short circuit situation in the device. In some examples, after step 1416, method 1400 may return to step 1402.

In step 1418 the control circuitry 210 may report a failing of the setting of the DC bus voltage. Control circuitry 210 may send a communication signal indicating that the setting of the DC bus voltage has not been completed. The control circuitry 210 may report that the first voltage and the second voltage are not equal. The control circuitry 210 may report that the first voltage and/or the second voltage are greater than the second threshold voltage. The control circuitry report may include an indication of an open circuit situation in the device. This situation may be indicative of a disconnect between the DC power source and the capacitor. In some examples, after step 1418, method 1400 may return to step 1402.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the disclosure. Accordingly, the foregoing description is by way of example only, and is not limiting.

The present application also discloses the subject matter of the following clauses:
Clause 1. An apparatus comprising:
   a power converter, the power converter comprising direct current (DC) output terminals; and
   a controller, wherein the controller is configured to:
      receive a first measured voltage at the DC output terminals,
      determine the first measured voltage is equal to zero,
      set the power converter to output a first output voltage, based on the first measured voltage being determined to equal zero,
      after setting the power converter to output the first output voltage, receiving a second measured voltage at the DC output terminals,
      determine the second measured voltage is equal to the first output voltage,
      send query communications to additional devices connected to the DC output terminals, based on the second measured voltage being determined to equal the first output voltage, and
      after the additional devices have responded to the query communications, set the power converter to output a second output voltage.
Clause 2. The apparatus of clause 1, wherein the query communications are power line communications on the DC output terminals.
Clause 3. The apparatus of clause 1, wherein the query communications are wireless communications.
Clause 4. The apparatus of any of clauses 1-3, wherein the controller is configured to determine the second measured voltage is equal to the first output voltage for a predetermined time, and based on the second measured voltage being determined to equal the first output voltage for the predetermined time, set the power converter to output the second output voltage.
Clause 5. The apparatus of any of clauses 1-4, wherein the controller is configured to:
   after setting the power converter to output the second output voltage, receive a third measured voltage at the DC output terminals,
   determine the third measured voltage is equal to the second output voltage,
   send power line query communications on the DC output terminals to second additional devices connected to the DC output terminals, based on the third measured voltage being determined to equal the second output voltage,
   after the second additional devices have responded to the power line query communications, set the power converter to output a third output voltage.
Clause 6. The apparatus of clause 5, wherein the controller is configured to determine the third measured voltage is equal to the second output voltage for a predetermined time, and based on the third measured voltage being determined to equal the second output voltage for the predetermined time, set the power converter to output the third output voltage.
Clause 7. The apparatus of any of clauses 1-6, wherein the first output voltage is below 50 volts DC.
Clause 8. The apparatus of any of clauses 1-7, wherein the second output voltage is between 50 volts DC and 240 volts DC.
Clause 9. The apparatus of any of clauses 1-7, wherein the second output voltage is between 240 volts DC and 1500 volts DC.
Clause 10. The apparatus of any of clauses 5-9, wherein the third output voltage is between 240 volts DC and 1500 volts DC.
Clause 11. The apparatus of any of clauses 1-10, wherein the power converter further comprises input terminals configured to connect to a DC power source, and wherein the power converter comprises DC-DC converter circuitry.
Clause 12. The apparatus of any of clauses 1-10, wherein the power converter further comprises input terminals configured to connect to an AC power source, and wherein the power converter comprises AC-DC converter circuitry.
Clause 13. The apparatus of any of clauses 1-12, wherein the controller is configured to:
   receive a first measured current supplied to the DC output terminals;
   determine the first measured current is greater than a first current threshold;
   set the power converter to reduce an output voltage of the power converter by a first predetermined amount relative to the first output voltage, based on the first measured current being determined as greater than the first current threshold;
   receive a second measured current supplied to the DC output terminals;
   determine the second measured current being greater than a second current threshold;
   set the power converter to reduce the output voltage of the power converter by a second predetermined amount relative to the first output voltage, based on the second measured current being determined as greater than the second current threshold;
   receive a third measured current supplied to the DC output terminals;
   determine the third measured current being greater than a third current threshold;
   set the power converter to reduce the output voltage of the power converter by a third predetermined amount relative to the first output voltage, based on the third measured current being determined as greater than the third current threshold.
Clause 14. The apparatus of any of clauses 1-13, wherein the controller is configured to:
   receive a first measured current supplied to the DC output terminals;
   determine the first measured current is greater than a first current threshold;
   set the power converter to reduce an output voltage of the power converter by a first predetermined amount relative to the second output voltage, based on the first measured current being determined as greater than the first current threshold;
   receive a second measured current supplied to the DC output terminals;
   determine the second measured current is greater than a second current threshold;
   set the power converter to reduce the output voltage of the power converter by a second predetermined amount relative to the second output voltage, based on the first measured current being determined as greater than the second current threshold;
   receive a third measured current supplied to the DC output terminals;
   determine the third measured current is greater than a third current threshold; and
   set the power converter to reduce the output voltage of the power converter by a third predetermined amount relative to the second output voltage, based on the third measured current being determined as greater than the third current threshold.
Clause 15. The apparatus of any of clauses 5-14, wherein the controller is configured to:
   receive a first measured current supplied to the DC output terminals;
   determine the first measured current is greater than a first current threshold;
   set the power converter to reduce an output voltage of the power converter by a first predetermined amount relative to the third output voltage, based on the first measured current being determined as greater than the first current threshold;
   receive a second measured current supplied to the DC output terminals;
   determine the second measured current is greater than a second current threshold;
   set the power converter to reduce the output voltage of the power converter by a second predetermined amount relative to the third output voltage, based on the second measured current being determined as greater than the second current threshold;
   receiving a third measured current supplied to the DC output terminals;
   determine the third measured current is greater than a third current threshold; and
   set the power converter to reduce the output voltage of the power converter by a third predetermined amount relative to the third output voltage, based on the third measured current being determined as greater than the third current threshold.
Clause 16. The apparatus of any one of clause 13 to clause 15, wherein the power converter is configured to limit output current to a current limit value.
Clause 17. The apparatus of clause 16, wherein the first current threshold is between 80% and 90% of the current limit value, and wherein the first predetermined amount is between 1 and 2.5 volts.
Clause 18. The apparatus of clause 16 or clause 17, wherein the second current threshold is between 90% and 95% of the current limit value, and wherein the second predetermined amount is between 2.5 and 15 volts.
Clause 19. The apparatus of any one of clause 16 to clause 18, wherein the third current threshold is greater than 95% of the current limit value, and wherein the third predetermined amount is between 5 and 25 volts.
Clause 20. The apparatus of any of clauses 1-19, wherein the power converter is configured to limit output current to a current limit value, and wherein the controller is configured to:
   receive a first measured current supplied to the DC output terminals;
   determine the first measured current is greater than 95% of the current limit value and an output voltage of the power converter is greater than the first output voltage; and
   set the power converter to output the first output voltage, based on the first measured current being determined as greater than 95% of the current limit value and the output voltage of the power converter being determined as greater than the first output voltage.
Clause 21. The apparatus of any of clauses 1-20, wherein the power converter is configured to limit output current to a current limit value, and wherein the controller is configured to:
   receive a first measured current supplied to the DC output terminals;
   determine the first measured current is greater than 95% of the current limit value and an output voltage of the power converter is greater than the second output voltage; and
   set the power converter to output the second output voltage, based on the first measured current being determined as greater than 95% of the current limit value and the output voltage of the power convert being determined as greater than the second output voltage.
Clause 22. The apparatus of any of clauses 1-21, wherein the DC output terminals are connected to a DC bus.
Clause 23. The apparatus of clause 22, wherein the additional devices are connected to the DC bus.
Clause 24. The apparatus of any of clauses 5-23, wherein the second additional devices are connected to a DC bus.
Clause 25. The apparatus of any of clauses 11-24, wherein the DC power source is a photovoltaic power source.
Clause 26. The apparatus of any of clauses 1-25, further comprising memory configured to store data related to the additional devices.
Clause 27. The apparatus of clause 26, wherein the controller is configured to, based on the data related to the additional devices, set the power converter to output the second output voltage.
Clause 28. The apparatus of clause 26 or clause 27, wherein the data related to the additional devices is based on at least one of: a state of charge of at least one of the additional devices, power usage of at least one of the additional devices, time usage related to at least one of the additional devices, or weather usage related to at least one of the additional devices.
Clause 29. A method comprising:
   receiving a first measured voltage of a direct current (DC) output terminal of a power converter,
   determining the first measured voltage is equal to zero,
   setting, based on the first measured voltage being determined to equal zero, the power converter to output a first output voltage,
   receiving a second measured voltage of the DC output terminal of the power converter,
   determining the second measured voltage is equal to the first output voltage,
   sending, based on the second measured voltage being determined to equal the first output voltage, power line communications on the DC output terminals to query additional devices connected to the DC output terminals,
   determining that the additional devices have responded to the power line communications, and
   setting, based on determining the additional devices have responded to the power line communications, the power converter to output a second output voltage.
Clause 30. The method of clause 29, further comprising: determining the second measured voltage is equal to the first output voltage for a predetermined time, and setting, based on the second measured voltage being determined to equal the first output voltage for the predetermined time, the power converter to output the second output voltage.
Clause 31. The method of clause 29 or clause 30, further comprising:
   receiving a third measured voltage of the DC output terminal of the power converter,
   determining the third measured voltage is equal to the second output voltage,
   sending, based on the third measured voltage being determined to equal the second output voltage, power line communications on the DC output terminals to query second additional devices connected to the DC output terminals,
   determining the second additional devices have responded to the power line communications,
   setting, based on determining the second additional devices have responded to the power line communications, the power converter to output a third output voltage.
Clause 32. The method of clause 31, further comprising determining the third measured voltage is equal to the second output voltage for a predetermined time, and setting, based on the third measured voltage being determined to equal the second output voltage for the predetermined time, the power converter to output the third output voltage.
Clause 33. The method of any clauses 29-32, wherein the first output voltage is below 50 volts DC.
Clause 34. The method of any of clauses 29-33, wherein the second output voltage is between 50 volts DC and 240 volts DC.
Clause 35. The method of any of clauses 29-33, wherein the second output voltage is between 240 volts DC and 1500 volts DC.
Clause 36. The method of any of clauses 31-35, wherein the third output voltage is between 240 volts DC and 1500 volts DC.
Clause 37. The method of any of clauses 29-36, wherein the power converter comprises DC-DC converter circuitry.
Clause 38. The method of any of clauses 29-37, wherein the power converter comprises alternating current to direct current (AC-DC) converter circuitry.
Clause 39. The method of any of clauses 29-38, further comprising:
   receiving a first measured current supplied to the DC output terminals;
   determining the first measured current is greater than a first current threshold;
   setting, based on the first measured current being determined as greater than the first current threshold, the power converter to reduce an output voltage of the power converter by a first predetermined amount relative to the first output voltage;
   receiving a second measured current supplied to the DC output terminals;
   determining the second measured current is greater than a second current threshold,
   setting, based on the second measured current being determined as greater than the second current threshold, the power converter to reduce the output voltage by a second predetermined amount relative to the first output voltage;
   receiving a third measured current supplied to the DC output terminals;
   determining the third measured current is greater than a third current threshold; and
   setting, based on the third measured current being determined as greater than the third current threshold, the power converter to reduce the output voltage by a third predetermined amount relative to the first output voltage.
Clause 40. The method of any of clauses 29-39, further comprising:
   receiving a first measured current supplied to the DC output terminals;
   determining the first measured current is greater than a first current threshold;
   setting, based on the first measured current being determined as greater than the first current threshold, the power converter to reduce an output voltage of the power converter by a first predetermined amount relative to the second output voltage;
   receiving a second measured current supplied to the DC output terminals;
   determining the second measured current is greater than a second current threshold;
   setting, based on the second measured current being determined as greater than the second current threshold, the power converter to reduce the output voltage by a second predetermined amount relative to the second output voltage;
   receiving a third measured current supplied to the DC output terminals;
   determining the third measured current is greater than a third current threshold; and
   setting, based on the third measured current being determined as greater than the third current threshold, the power converter to reduce the output voltage by a third predetermined amount relative to the second output voltage.
Clause 41. The method of any of clauses 31-40, further comprising:
   receiving a first measured current supplied to the DC output terminals;
   determining the first measured current is greater than a first current threshold;
   setting, based on the first measured current being determined as greater than the first current threshold, the power converter to reduce an output voltage of the power converter by a first predetermined amount relative to the third output voltage;
   receiving a second measured current supplied to the DC output terminals;
   determining the second measured current is greater than a second current threshold;
   setting, based on the second measured current being determined as greater than the second current threshold, the power converter to reduce the output voltage by a second predetermined amount relative to the third output voltage;
   receiving a third measured current supplied to the DC output terminals;
   determining the third measured current is greater than a third current threshold; and
   setting, based on the third measured current being determined as greater than the third current threshold, the power converter to reduce the output voltage by a third predetermined amount relative to the third output voltage.
Clause 42. The method of any one of clause 39 to clause 41, wherein the power converter is configured to limit output current to a current limit value.
Clause 43. The method of clause 42, wherein the first current threshold is between 80% and 90% of the current limit value, and wherein the first predetermined amount is between 1 and 2.5 volts.
Clause 44. The method of clause 42 or clause 43, wherein the second current threshold is between 90% and 95% of the current limit value, and wherein the second predetermined amount is between 2.5 and 15 volts.
Clause 45. The method of any one of clause 42 to clause 44, wherein the third current threshold is greater than 95% of the current limit value, and wherein the third predetermined amount is between 5 and 25 volts.
Clause 46. The method of any of clauses 29-45, wherein the power converter is configured to limit output current to a current limit value, and the method further comprising:
   receiving a first measured current supplied to the DC output terminals;
   determining the first measured current is greater than 95% of the current limit value and the output voltage is greater than the first output voltage; and
   setting, based on the first measured current being determined as greater than 95% of the current limit value and the output voltage being determined as greater than the first output voltage, the power converter to the first output voltage.
Clause 47. The method of any of clauses 29-46, wherein the power converter is configured to limit output current to a current limit value, and the method further comprising:
   receiving a first measured current supplied to the DC output terminals;
   determining the first measured current is greater than 95% of the current limit value and the output voltage is greater than the second output voltage; and
   setting, based on the first measured current being determined as greater than 95% of the current limit value and the output voltage being determined as greater than the second output voltage, the power converter to the second output voltage.
Clause 48. The method of any of clauses 29-47, wherein the DC output terminals are connected to a DC bus.
Clause 49. The method of clause 48, wherein the additional devices are connected to the DC bus.
Clause 50. The method of any of clauses 31-49, wherein the second additional devices are connected to a DC bus.
Clause 51. The method of any of clauses 29-50, further comprising storing data related to the additional devices.
Clause 52. The method of clause 51, further comprising setting, based on the data related to the additional devices, the power converter to output the second output voltage.
Clause 53. The method of any of clauses 29-52, further comprising setting, based on a sleep mode of operation, the power converter to output the first output voltage.
Clause 54. The method of any of clauses 29-53, further comprising setting, based on a hibernation mode of operation, the power converter to output a safety voltage.
Clause 55. The method of clause 54, further comprising setting, based on a wake-up mode of operation, the power converter to output the first output voltage.
Clause 56. The method of clause 53 or clause 54, further comprising setting, based on a wake-up mode of operation, the power converter to output the second output voltage.
Clause 57. The method of clause 53 or clause 54, further comprising:
   receiving data related to the additional devices, and
   setting, based on a wake-up mode of operation and the data related to the additional devices, the output voltage of the power converter to a voltage level greater than zero.
Clause 58. The method of any one of clause 51, clause 52, or clause 57, wherein the data related to the additional devices is based on at least one of: a state of charge of at least one of the additional devices, power usage of at least one of the additional devices, time usage related to at least one of the additional devices, or weather usage related to at least one of the additional devices.
Clause 59. The method of any of clauses 29-58, further comprising setting, based on a sleep mode of operation, the power converter to output zero voltage.
Clause 60. A system comprising:
   a plurality of inverters, each inverter comprising:
      a bidirectional alternating current to direct current (AC-DC) converter circuitry;
      DC terminals; and
      AC terminals;
   a first AC electrical network configured to:
      connect to a utility grid, and
      supply AC power to a first plurality of AC loads,
   a second AC electrical network configured to:
      supply AC power to a second plurality of AC loads,
      wherein the second AC electrical network is isolated from the utility grid;
   a DC electrical network configured to:
      supply DC power to a plurality of DC loads, and
      supply DC power to a third plurality of AC loads;
   wherein a first bidirectional converter circuitry of the plurality of inverters is connected between the first AC electrical network and the DC electrical network, wherein the bidirectional inverter is configured to operate at a fixed power and a fixed voltage, and
   wherein a second inverter of the plurality of inverters is connected between the second AC electrical network and the DC electrical network.
Clause 61. A method comprising:
   starting a power device connected to a direct current (DC) bus,
   connecting a power source to the DC bus,
   determining an overcurrent condition and lowering output voltage to the DC bus.
Clause 62. The method of clause 61, further comprising entering a sleep mode of operation to output a low voltage on the DC bus.
Clause 63. The method of clause 61 or clause 62, further comprising entering a hibernation mode of operation to output a safety voltage on the DC bus.
Clause 64. The method of any one of clause 61 to clause 63, further comprising entering a shut-down mode of operation to output zero voltage on the DC bus.
Clause 65. The method of any one of clause 61 to clause 64, further comprising entering a wake-up mode of operation to output a high voltage on the DC bus.
Clause 66. The method of any one of clause 61 to clause 65, further comprising determining the overcurrent condition by:
   measuring a current related to the DC bus,
   determining the current is greater than a current threshold, wherein the current threshold is relative to a current limit.
Clause 67. The method of any one of clause 61 to clause 65, further comprising determining the overcurrent condition by determining a timer value is greater than a timer threshold.
Clause 68. A method comprising:
   receiving a first voltage at direct current (DC) bus terminals,
   receiving a first query,
   replying to the first query, and
   receiving a second voltage at the DC bus terminals.
Clause 69. The method of clause 68, further comprising:
   receiving a second query,
   replying to the second query, and
   receiving a third voltage at the DC bus terminals.
Clause 70. The method of clause 68 or clause 69, further comprising:
   transmitting a configuration profile.
Clause 71. The method of any one of clause 68 to clause 70, further comprising:
   communicating by power line communications on the DC bus terminals.
Clause 72. The method of one of clause 68 to clause 70, further comprising:
   communicating by wireless communications.
Clause 73. A method comprising:
   transmitting a query by a first device connected to direct current (DC) bus terminals,
   receiving a response to the query from a second device connected to the DC bus terminals,
   receiving a configuration profile from the second device, and
   storing the configuration profile.
Clause 74. The method of clause 73, further comprising:
   determining a power profile of the second device, and
   storing the power profile.
Clause 75. The method of clause 73 or clause 74, further comprising:
   determining a non-communicative third device connected to the DC bus terminals,
   determining a second power profile of the third device, and
   storing the second power profile.
Clause 76. The method of any one of clause 73 to clause 75, wherein the configuration profile includes data related to at least one of: a state of charge of the second device, power usage of the second device, time usage related to the second device, or weather usage related to the second device.
Clause 77. The method of any one of clause 73 to clause 76, wherein the power profile includes data related to at least one of: a state of charge of the second device, power usage of the second device, time usage related to the second device, or weather usage related to the second device.
Clause 78. The method of any one of clause 73 to clause 77, further comprising, based on the configuration profile, setting a voltage at the DC bus terminals.
Clause 79. The method of any one of clause 74 to clause 78, further comprising, based on the power profile, setting a voltage at the DC bus terminals.
Clause 80. The method of any of clauses 75-79, further comprising, based on the second power profile, setting a voltage at the DC bus terminals.

## Claims

1. A system comprising:
a plurality of power devices, each power device comprising:
a power converter having direct current, DC, output terminals connected to a DC bus, and
a controller;
wherein:
a first controller of a first power device of the plurality of power devices is configured to operate in a primary role in which the first controller ramps up a voltage of the DC bus through a plurality of voltage levels by setting an output voltage of its power converter;
a second controller of a second power device of the plurality of power devices is configured, based on a determination that the second power device produces a greater output voltage than the first power device, to assume the primary role;
the first controller is configured, based on the second controller assuming the primary role, to switch to a monitoring mode of operation in which the first controller draws power sufficient to operate the first controller and disconnects a power source of the first power device from the DC bus; and
the first controller is configured to resume the primary role based on a determination that the second power device subsequently produces a lower output voltage than the first power device.

2. The system according to claim 1, wherein the first controller, when operating in the primary role, is configured to ramp up the voltage of the DC bus through the plurality of voltage levels by:
setting the power converter of the first power device to output a first voltage level based on a measured voltage of the DC bus being determined to equal zero;
sending query communications to additional devices connected to the DC bus based on the measured voltage being determined to equal the first voltage level; and
setting the power converter of the first power device to output a second voltage level, higher than the first voltage level, after the additional devices have responded to the query communications.

3. The system according to claim 2, wherein the first controller is configured to set the power converter of the first power device to output the second voltage level further based on a predetermined time having passed while the measured voltage is equal to the first voltage level, when no response to the query communications is received.

4. The system according to claim 2 or claim 3, wherein the query communications are power line communications on the DC bus or wireless communications.

5. The system according to any one of claims 1 to 4, wherein the plurality of voltage levels comprises a voltage level below 50 volts DC, a voltage level between 50 volts DC and 240 volts DC, and a voltage level between 240 volts DC and 1500 volts DC.

6. The system according to any one of claims 1 to 5, wherein the first power device is a bi-directional power device comprising charge storage circuitry as the power source, and the second power device is a uni-directional power device comprising power generation circuitry as a power source.

7. The system according to claim 6, wherein the power generation circuitry of the second power device comprises one or more photovoltaic modules.

8. The system according to any one of claims 1 to 7, wherein the first controller is configured to assume the primary role and ramp up the voltage of the DC bus before the second power device produces power greater than a power threshold, and wherein the second power device is configured to connect to and supply power to the DC bus after the voltage of the DC bus has been ramped up above a zero voltage level.

9. The system according to any one of claims 1 to 8, wherein each power device further comprises memory configured to store at least one of a configuration profile or a power profile related to one or more other power devices connected to the DC bus, and wherein the first controller is configured to set the output voltage of its power converter based on the stored at least one of the configuration profile or the power profile.

10. The system according to claim 9, wherein the at least one of the configuration profile or the power profile comprises data related to at least one of: a state of charge, power usage, time usage, or weather usage.

11. The system according to any one of claims 1 to 10, wherein the controller of at least one power device is configured to:
measure a current supplied to the DC output terminals of its power converter; and
reduce, based on the measured current being determined to be greater than a current threshold for a predetermined time, the output voltage of its power converter,
wherein the controller is configured to reduce the output voltage by a predetermined amount relative to a current voltage level or to a lower voltage level of the plurality of voltage levels.

12. A method of managing a direct current, DC, bus to which a plurality of power devices are connected, each power device comprising a power converter and a controller, the method comprising:
operating a first controller of a first power device in a primary role in which the first controller ramps up a voltage of the DC bus through a plurality of voltage levels by setting an output voltage of the power converter of the first power device;
assuming, by a second controller of a second power device and based on a determination that the second power device produces a greater output voltage than the first power device, the primary role;
switching, by the first controller and based on the second controller assuming the primary role, to a monitoring mode of operation in which the first controller draws power sufficient to operate the first controller and disconnects a power source of the first power device from the DC bus; and
resuming, by the first controller, the primary role based on a determination that the second power device subsequently produces a lower output voltage than the first power device.

13. The method according to claim 12, wherein ramping up the voltage of the DC bus comprises:
setting the power converter of the first power device to output a first voltage level based on a measured voltage of the DC bus being determined to equal zero;
sending query communications to additional devices connected to the DC bus based on the measured voltage being determined to equal the first voltage level; and
setting the power converter of the first power device to output a second voltage level, higher than the first voltage level, after the additional devices have responded to the query communications or after a predetermined time has passed while the measured voltage is equal to the first voltage level.

14. The method according to claim 12 or claim 13, further comprising at least one of:
setting, based on a sleep mode of operation, the power converter of a power device to output a low voltage level;
setting, based on a hibernation mode of operation, the power converter of a power device to output a safety voltage level; and
setting, based on a shutdown mode of operation, the power converter of a power device to output a zero voltage level.

15. An apparatus configured to operate as a power device of the system according to any one of claims 1 to 11, the apparatus comprising:
a power converter having direct current, DC, output terminals configured to connect to a DC bus, the power converter being connectable to a power source; and
a controller configured to:
operate in a primary role in which the controller ramps up a voltage of the DC bus through a plurality of voltage levels by setting an output voltage of the power converter;
switch, based on a determination that a further power device connected to the DC bus produces a greater output voltage than the apparatus, to a monitoring mode of operation in which the controller draws power sufficient to operate the controller and disconnects the power source from the DC bus; and
resume the primary role based on a determination that the further power device subsequently produces a lower output voltage than the apparatus.
